# EUROPÄISCHE PATENTSCHRIFT

(11) **EP 2 697 700 B1**
(45) Veröffentlichungstag und Bekanntmachung des Hinweises auf die Patenterteilung: **04.07.2018**
(21) Anmeldenummer: 12715372.4
(22) Anmeldetag: 13.04.2012
(51) Int. Cl.: G05D 1/00, B64C 39/02

(54) **SYSTEM UND VERFAHREN ZUR STEUERUNG EINES UNBEMANNTEN FLUGGERÄTS**
SYSTEM AND METHOD FOR CONTROLLING AN UNMANNED AIR VEHICLE
SYSTÈME ET PROCÉDÉ DE COMMANDE D'UN AÉRONEF NON HABITÉ

(30) Priorität: 14.04.2011 EP 11162507
(43) Veröffentlichungstag der Anmeldung: 19.02.2014
(73) Patentinhaber: Hexagon Technology Center GmbH, 9435 Heerbrugg (CH)
(72) Erfinder: METZLER, Bernhard, A-6850 Dornbirn (AT); SIERCKS, Knut, CH-9402 Mörschwil (CH)
(74) Vertreter: Kaminski Harmann
(86) Internationale Anmeldenummer: PCT/EP2012/056760
(87) Internationale Veröffentlichungsnummer: WO 2012/140191

(56) Entgegenhaltungen:
- DE-A1- 3 107 674
- JP-A- 2000 159 194
- JP-A- 2003 104 295
- US-A- 5 372 334
- US-B2- 6 955 324

## Beschreibung

Die Erfindung betrifft ein Vermessungssystem zur Steuerung eines auto-mobilen, unbemannten, steuerbaren Fluggeräts mit einer Vermessungseinheit nach dem Oberbegriff des Anspruchs 1 und ein Verfahren zum Steuern des Fluggeräts nach Anspruch 8.

Aufgrund einer flexiblen Einsetzbarkeit, sei es zum Erreichen schwer zugänglicher Geländeabschnitte, beispielsweise bei der Feuerbekämpfung oder in Katastrophengebieten, oder zur bildgestützten Überprüfung grosser Objekte, finden unbemannte Fluggeräte heute auf vielen Gebieten der Technik Anwendung. Zur Erfassung von Geländeformationen können derartige Geräte mit Sensoren, beispielsweise mit Kameras, ausgerüstet und grössere Geländeabschnitte damit aus der Luft zusammenhängend aufgenommen werden. Weiterhin können entsprechende Drohnen zu militärischen Zwecken z.B. zur Überwachung, Zielerfassung, als Kampfeinheit oder Transportmittel eingesetzt werden.

In US 6,955,342 B2 ist beispielsweise ein für militärische Zwecke, insbesondere Überwachungszwecke, vorgesehenes Steuerungssystem für unbemannte Fluggeräte (UAV) offenbart. Neben dem Fluggerät (UAV) umfasst das Steuerungssystem auch eine Bodenstation, welche auf einem Bodenfahrzeug angeordnet ist, einen elektromagnetischen Stahl emittiert und mittels dieses elektromagnetischen Stahls die UAV steuert. Seitens des UAVs ist ein Empfänger zur Positionsbestimmung durch Bestimmung des Auftreffens des Strahls auf dem Empfänger vorgesehen. Das UAV wird zudem mittels der empfangenen Strahlung mit Energie versorgt und kann durch eine Änderung der Ausrichtung des Strahls gezielt bewegt werden. Die Bodenstation ist auf dem Fahrzeug nicht störungsfrei positionierbar. Vielmehr ist sie für den hochmobilen Einsatz konzipiert, wobei trotz der gattungsgemässen Dämpfung des Fahrzeugs Vibrationen und Schwingungen auf die Bodenstation übertragen werden, was Messungen mit geodätischer Genauigkeit verunmöglicht.

US 5,372,334 offenbart ein Projektil-Leitsystem mit einem oder mehreren Projektilen, die jeweils mit mindestens einem Retroreflektor zum Reflektieren elektromagnetischer Strahlung ausgestattet sind sowie mit einer Bodenstation, die elektromagnetische Strahlung zu einem Projektil aussendet und entsprechend reflektierte Strahlung wieder empfängt und auswertet. Der offenbarte Retroreflektor dient jeweils der Rollwinkelbestimmung des Projektils. Steuersignale, die von der Bodenstation an das Projektil gesandt werden, werden von einer entsprechenden Empfangseinheit des Projektils empfangen und über entsprechende Steuerungselemente des Projektils in gezielte Änderungen des Rollverhaltens des Projektils umgesetzt.

Eine Steuerung bzw. Bewegung eines unbemannten Fluggeräts kann prinzipiell manuell mittels einer Fernsteuerung durch einen Benutzer oder vollständig autonom bzw. semi-autonom, zumeist auf Basis von GNSS-Positionsinformationen, erfolgen.

Im Allgemeinen können bei einer Bewegung des Fluggeräts, beispielsweise bei einem helikopter-ähnlichen Fluggerät, vier von sechs Freiheitsgraden geändert werden, d.h. das Fluggerät kann vor und zurück, links und rechts sowie auf und ab bewegt werden. Zudem kann durch eine Drehung um die vertikale Achse die Ausrichtung des Fluggeräts verändert werden. Die verbleibenden zwei Freiheitsgrade sind durch die im Wesentlichen horizontale Lage des Fluggeräts festgelegt.

Eine präzise Positionierung in einer vorgegebenen Position oder eine präzise Bewegung z.B. entlang einer vordefinierten Achse oder Flugroute erweist sich bei der manuellen Steuerung für einen Benutzer als schwierig. Insbesondere dann, wenn das Fluggerät äusseren Einflüssen, wie z.B. Wind, ausgesetzt ist und die dadurch entstehenden Abweichungen reaktionsschnell kompensiert werden müssen, kann bei einer derartigen manuellen Steuerung eine geforderte Genauigkeit oftmals nicht eingehalten werden.

Weiters ist der Einsatzbereich für eine autonome GNSSbasierte Steuerung limitiert auf Orte, an denen eine für die Positionsbestimmung ausreichende Anzahl von Satellitensignalen empfangen werden kann. Ein Einsatz z.B. in geschlossenen Räumen oder Tunneln ist somit im Allgemeinen nicht möglich. Auch der Einsatz in dicht bebauten Gebieten kann bei einer Abschirmung von GNSS-Signalen durch Gebäude sich als schwierig erweisen.

Zur Steuerung eines Fluggeräts in einem derart bebauten Gebiet schlägt die EP 1 926 007 ein erstes Überfliegen des relevanten Gebiets vor, wobei Bilder erfasst und zu jedem Bild eine GPS-Information gespeichert wird. Die Bilder werden anschliessend zu einem Übersichtsbild mit GPS-Positionsinformation zusammengefügt. Für eine Navigation des Fluggeräts können nun Bilder, die in einer kleineren Höhe als die vorab erfassten aufgenommen werden mit dem Übersichtsbild verglichen und anhand der gespeicherten GPS-Information eine jeweilige Position des Fluggeräts abgeleitet werden. Nachteile bei diesem Vorgehen können sich ergeben, wenn das erste Übersichtsbild nicht alle Bereiche der Gebäude und der Zwischenräume der Gebäude umfasst und bei einem Bildvergleich somit keine Übereinstimmung auffindbar ist. Auch durch Veränderungen der zuerst erfassten Umgebung, beispielsweise durch Bewegung von auf dem Bild dargestellten Fahrzeugen oder Veränderungen von Lichtverhältnissen kann eine Positionsbestimmung beeinträchtigt werden. Ferner ist diese Methode durch die Auflösung der die Umgebung erfassenden Kamera limitiert.

In der EP 1 898 181 wird ein weiteres System und Verfahren zum Steuern eines unbemannten Fluggeräts geoffenbart, wobei GPS-Signale, Messdaten von Trägheitssensoren und mit einer Kamera erfasste Bilder für eine Bestimmung bzw. Schätzung einer Position des Fluggeräts herangezogen werden. Die erfassten Signale und Daten können einer Recheneinheit zugeführt und daraus die Position bestimmt werden. Durch den Einsatz der Kamera kann die Durchführung dieser Positionsbestimmung gegenüber Systemen ohne Kamera verlässlichere Ergebnisse liefern und eine erhöhte Genauigkeit ermöglichen. Jedoch ist auch diese Methode durch die Auflösung der Kamera limitiert bzw. durch Veränderungen der erfassten Umgebung gegebenenfalls nur bedingt durchführbar.

Bei einer autonomen Steuerung kann dem Fluggerät ferner die Route in Form einer Trajektorie, z.B. definiert durch mehrere Wegpunktpositionen, vorgegeben werden. In der EP 2 177 966 wird ein Navigationsverfahren für ein Fluggerät auf Basis einer vorgegeben Flugroute beschrieben, wobei zur Steuerung des Fluggeräts mit einer Kamera Bilder der Flugumgebung erfasst und auf deren Basis die Flugroute angepasst werden kann. Zur Steuerung des Fluggeräts auf der Flugroute können bestimmte Sollpositionen bzw. Wegpunktpositionen mit einer aktuellen Istposition des Fluggeräts, welche z.B. durch die GNSS-Signale bestimmt werden kann, abgeglichen werden. Aus den Positionsdifferenzen können so Steuersignale für die Bewegung des Fluggeräts ermittelt und damit eine Abweichung der Istposition zur Zielposition sukzessive verkleinert werden.

Den genannten Methoden bzw. Systemen ist gemein, dass die Lage des Fluggeräts mittels GNSS-Sensoren, insbesondere die vertikale Position, nur bis auf 2-5 cm genau bestimmt werden kann. Diese Unsicherheit wirkt sich im Weiteren stark limitierend auf die Genauigkeit bei einer Positionsbestimmung des Fluggeräts und auf die Genauigkeit bei der Steuerung des Fluggeräts aus.

Aufgabe der vorliegenden Erfindung ist es demnach, ein verbessertes, robusteres System bzw. Verfahren zur Steuerung eines unbemannten Fluggeräts bereitzustellen, mit welchen das Fluggerät benutzerfreundlicher, präziser und mit einem höheren Automatisierungsgrad positioniert und bewegt werden kann. Eine spezielle Aufgabe der Erfindung ist es, diese Positionierung und Bewegung des Fluggeräts unabhängig von einer Empfangbarkeit von GNSS-Signalen durchführbar zu machen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das System zur Steuerung des unbemannten Fluggeräts (UAV = Unmanned Aerial Vehicle) weist einen Theodolit, eine Totalstation, einen Lasertracker, einen Laserscanner oder einen Rotationslaser und eine Steuereinheit auf. Die Steuereinheit kann mittels Steuersignalen eine Positionierung oder Bewegung des Fluggeräts erwirken, indem dadurch z.B. eine Rotationsgeschwindigkeit der, insbesondere vier, Rotoren des Fluggeräts oder eine jeweilige Ausrichtung der Rotoren definiert einstellbar ist. Das jeweilige Vermessungsgerät steht dabei mit dem Fluggerät beispielsweise durch einen vom Vermessungsgerät emittierten Laserstrahl und/oder durch Funksignale in Kontakt. Mittels des Laserstrahls und einem am Fluggerät angebrachten Reflektor kann durch Reflexion des Strahls und Empfangen am Vermessungsgerät eine Entfernung des Fluggeräts zum Vermessungsgerät bestimmt werden. Durch Winkelmesser am Vermessungsgerät können ferner ein Vertikal- und Horizontalwinkel des emittierten Strahls, also eine Emissionsrichtung, erfasst und in Kombination mit der bestimmten Entfernung daraus eine Position des Fluggeräts zum Vermessungsgerät in einem relativen Koordinatensystem geodätisch genau bestimmt werden.

In einer nicht unter die beanspruchte Erfindung fallenden Variante kann der Laserstrahl z.B. in einer Kombination Fluggerät/Rotationslaser seitens des Fluggeräts durch eine Laserstrahlempfangseinheit empfangen werden. Mittels dieser Einheit kann ein Einfallswinkel des Laserstrahls relativ zur Empfangseinheit bestimmt und daraus eine relative Ausrichtung des Fluggeräts zum Laserstrahl (Istzustand des Fluggeräts) mit einer Auswerteeinheit abgeleitet werden. Zudem kann eine Ablage des Strahls aus einer definierten Nullposition der Empfangseinheit bestimmt und daraus wiederum eine relative Position des Fluggeräts zum Laserstrahl abgeleitet werden. Aus der jeweiligen Ablage und/oder dem Einfallswinkel können Korrekturparameter ermittelt werden, die dazu dienen das Fluggerät derart zu steuern, dass eine Sollposition und Sollausrichtung erreicht wird, wobei bei Erreichen des Sollzustands die Ablage bzw. der relative Einfallswinkel jeweils die Nulllage, d.h. keine Abweichung vom einem Sollwert aufweisen, einnehmen.

Mit einer derartigen Empfangseinheit kann das Fluggerät ausserdem an einen Laserstrahl angekoppelt werden. Beispielsweise kann dieser Strahl von einem Laserscanner emittiert werden und das Fluggerät von einem Benutzer mit einer Fernsteuerung so gesteuert werden, dass der Laserstrahl auf die Empfangseinheit trifft. Sobald der Strahl empfangen wird, kann dann eine Recheneinheit im Fluggerät die Steuerung zumindest teilweise übernehmen. In einem Regelkreis kann die aktuelle Position, die Orientierung, die Geschwindigkeit und Flugrichtung des Fluggeräts fortlaufend ermittelt werden und so ausgeglichen oder korrigiert werden, dass der Laserstrahl zentral, d.h. ohne Abweichungen aus der Nulllage, in die Empfangseinheit trifft. Der Benutzer kann jetzt mit der Fernsteuerung das Fluggerät entlang des Laserstrahls, also mit einem verbleibenden Freiheitsgrad, bewegen. In dieser Konfiguration kann nun zusätzlich oder alternativ durch eine Neuausrichtung bzw. durch ein Schwenken des emittierten Strahls das Fluggerät geführt werden. Wird anstelle des Laserscanners z.B. ein Rotationslaser eingesetzt, kann damit eine Laserebene aufgespannt werden und das Fluggerät auf diese Ebene "gesetzt" werden. Auch hier kann der Benutzer - jetzt mit zwei Freiheitsgraden - das Fluggerät in der Ebene bzw. parallel dazu bewegen. Die Ebene oder Strahl können z.B. horizontal ausgerichtet werden und so eine horizontale Bewegung des Fluggeräts bewirken. Ausserdem können diese in einem beliebigen Winkel oder vertikal ausgerichtet werden, insbesondere wobei bei einer vertikalen Ausrichtung die Höhe des Fluggeräts über dem Boden frei wählbar bleiben kann. Eine derartige Anwendung kann beispielsweise bei Arbeiten entlang oder für eine Vermessung einer Gebäudefassade nützlich sein.

Je nach Ausgestaltung der Laserstrahlempfangseinheit kann der zu detektierende Einfallswinkelbereich auf einen Bereich beispielsweise zwischen 0° und 180°, insbesondere zwischen 0° und 45°, beschränkt sein. Damit muss, um ein kontinuierliches Empfangen des Strahls zu gewährleisten, die Anordnung der Empfangseinheit am Fluggerät an die jeweilige Ausrichtung des Laserstrahls bzw. der Laserebene angepasst sein. Bei einer horizontalen Stahlausrichtung kann die Laserstrahlempfangseinheit z.B. seitlich am UAV angebracht, bei einer vertikalen Ausrichtung z.B. an der Unterseite des UAVs angeordnet sein. Für einen universellen Einsatz des Fluggeräts kann die Laserstrahlempfangseinheit ferner derart schwenkbar am Fluggerät angebracht sein, dass die Empfangseinheit je nach Ausrichtung des Laserstrahls in eine bestimmte Winkelstellung geschwenkt und damit den Strahl innerhalb des strukturell vorgegebenen Erfassungsbereichs empfangen kann. Auch zur Bestimmung der Strahlablage kann, abhängig von der Strahlausrichtung, die Anordnung der Empfangseinheit angepasst bzw. eine Haupterfassungsrichtung der Empfangseinheit schenkend zum Strahl ausgerichtet werden.

Prinzipiell kann für die Steuerung des UAV fortlaufend ein Istzustand des Fluggeräts im relativen Koordinatensystem, d.h. ein Zustand, der beispielsweise zumindest teilweise eine aktuelle Position, eine aktuelle Ausrichtung, eine Geschwindigkeit und/oder eine Flugrichtung des Fluggeräts beschreibt, durch ein Zusammenwirken mit der Vermessungseinheit bestimmt werden. Zudem kann ein Sollzustand für das Fluggerät mit einem in Zusammensetzung und Format zum Istzustand korrespondierenden Informationsgehalt im Vermessungssystem vorgegeben werden. Auf Basis des so bestimmten Istzustands und des definierten, von Fluggerät zu erreichenden Sollzustands können durch einen Zustandsvergleich Korrekturwerte ermittelt werden, mittels derer die gezielte Steuerung des Fluggeräts hin zum Sollzustand realisierbar ist. Aus den Korrekturen können somit Steuerungsdaten abgeleitet und dem Fluggerät beispielsweise zur Ansteuerung der Rotoren zur Verfügung gestellt werden. Die Korrektur- bzw. Steuerungsdaten können durch die Steuereinheit ermittelt werden, wobei die Steuereinheit dabei der Vermessungseinheit, dem Fluggerät oder der Fernsteuerung zugeordnet oder als weiter strukturell eigenständige Einheit ausgebildet sein kann.

Dem System können ferner ein Einzelpunkt, eine Trajektorie, eine Achse und/oder eine Ebene als Sollzustand bzw. Sollposition vorgegeben und das Fluggerät entsprechend der jeweiligen Vorgabe, insbesondere durch ein fortlaufendes Vergleichen von Soll- und Istwerten und ein iteratives Neupositionieren, positioniert und bewegt werden. Eine Trajektorie bzw. eine Flugroute kann z.B. durch einen Startpunkt und einen Endpunkt festgelegt werden, wobei das Fluggerät in diesem Fall auf einer geraden Verbindungslinie vom Start- zum Endpunkt manuell, autonom oder semi-autonom, d.h. das Fluggerät bewegt sich im Wesentlichen selbstständig, ein Benutzer kann jedoch in den Bewegungsablauf eingreifen und diesen beispielsweise vorübergehend unterbrechen, geführt werden kann. Zwischen dem Start- und Endpunkt können weitere Wegpunkte definiert werden und die Flugroute, insbesondere automatisch, so angepasst werden, dass die Wegpunkte auf der Route liegen. Ferner kann die abzufliegende Flugroute unabhängig von Start-, End- und Wegpunkten, sondern durch die Lage einer Bewegungsachse definiert werden. Für die Steuerung des Fluggeräts kann bei einer definierten Flugroute ein Vergleich des Routenverlaufs mit dem aktuellen Istzustand des Fluggeräts vorgenommen werden und auf dieser Basis die jeweiligen Korrekturwerte bzw. Steuerungsdaten ermittelt werden. Dabei kann zur Optimierung der Flugbewegung des Fluggeräts bei einer notwendigen Positionskorrektur hin zur Flugroute anstelle einer direkten Bewegung, d.h. anstelle einer Bewegung entlang der kürzesten Verbindung zwischen Istposition und Flugroute, eine optimierte Korrekturbewegung z.B. unter Berücksichtigung der aktuellen Flugrichtung und Geschwindigkeit des Fluggeräts erfolgen.

Neben Messungen des Vermessungsgeräts können auch Messungen einer am Fluggerät angeordneten Sensoreinheit zur Bestimmung der Ausrichtung des Fluggeräts und/oder der Geschwindigkeit im relativen Koordinatensystem zur Bestimmung von Korrekturen verwendet werden. Die Sensoreinheit kann hierfür Trägheitswerte, z.B. mittels eines Beschleunigungssensors, und eine geografische Ausrichtung, z.B. durch ein Magnetometer, erfassen. Die Korrekturen können ebenfalls in Steuersignale für das Fluggerät übersetzt werden und damit eine Änderung der Position, der Ausrichtung, der Geschwindigkeit und/oder der Flugrichtung bewirken.

Weiter können zur Bestimmung der Ausrichtung des Fluggeräts Markierungen, z.B. definierte Muster, Pseudo-Random-Patterns oder Leuchtmittel, in einer bestimmten Lage und Anordnung am Fluggerät angebracht sein und eine externe Erfassungseinheit diese Markierungen erfassen. Die Erfassungseinheit, insbesondere eine Kamera, kann hierfür am Vermessungsgerät angeordnet oder als eigenständige Einheit ausgebildet sein. Die Lage von zumindest Teilen der Markierungen auf einem von der Kamera erfassten Bild kann dann einen Rückschluss auf die Ausrichtung des Fluggeräts im relativen Koordinatensystem zulassen. Ferner kann das Fluggerät mit einer RIM-Kamera (Range Imaging Kamera) erfasst und damit ein Bild mit punktaufgelösten Abstandswerten von der RIM-Kamera zum Fluggerät erfasst werden. Aus diesen Daten kann somit ebenfalls die Entfernung und bei Kenntnis der Form des Fluggeräts die Ausrichtung des Fluggeräts abgeleitet werden.

Mit an dem Fluggerät angeordneten Abstandsmesssensoren können ausserdem weitere Anwendungen ermöglicht werden. Dabei kann beispielsweise die Steuerung des Fluggeräts derart erfolgen, dass ein Abstand zu einem Objekt z.B. auf 40 cm, insbesondere zur Kollisionsvermeidung oder Beibehaltung eines optimalen Messabstands für einen zusätzlich Datenerfassungssensor (z.B. Scanner oder Kamera), konstant gehalten werden kann. Z.B. kann somit eine verlässliche Steuerung des Fluggeräts in Umgebungen mit begrenztem Platzangebot durchgeführt werden, indem durch die Abstandssensoren allfällige Hindernisse detektiert und umflogen werden können bzw. räumliche Begrenzungen, z.B. bei einem Flug durch ein Rohr, eine Pipeline oder einen Tunnel, fortlaufend gemessen und die Position des Fluggeräts entsprechend angepasst werden kann.

Bei einer derartigen raumbegrenzten Bewegung kann das Fluggerät insbesondere an einen Laserstrahl gekoppelt und anhand dieses Strahls geführt werden. Mit einer derartigen Kombination aus Abstandsmessung und Führung anhand eines Strahls kann ferner beispielsweise bei horizontaler Ausrichtung des Führungsstrahls, Bewegung des Fluggeräts entlang dieses Strahls und einer kontinuierlichen Abstandsmessung zum überflogenen Gelände durch eine Verknüpfung von jeweiligen Anstandsmessungen und jeweiligen Fluggerätpositionen ein Geländeprofil bzw. ein Geländeschnitt erstellt werden.

Insbesondere kann die Position der Vermessungseinheit, d.h. deren Aufstellpunkt, durch einen bekannten Punkt vorgegeben sein und eine Ausrichtungsbestimmung durch ein Anmessen eines bekannten Zielpunkts oder mittels eines Neigungssensors und eines Magnetometers erfolgen. Die Positions- und Ausrichtungsbestimmung kann ausserdem, insbesondere dann wenn der Aufstellpunkt nicht bekannt ist, durch ein Anzielen mindestens dreier Zielpunkte durchgeführt werden. Durch dieses Vorgehen können die Position und die Koordinaten der Vermessungseinheit und die Orientierung der Vermessungseinheit in einem globalen, dem relativen Koordinatensystem übergeordneten, Koordinatensystem bestimmt werden. Ferner kann die Richtung der Bewegungsachse im globalen Koordinatensystem gegeben sein. Mit dieser Kenntnis kann nun eine Referenzierung des relativen mit dem globalen Koordinatensystem, z.B. durch Koordinatentransformation, erfolgen. Damit können die im relativen Koordinatensystem bestimmte Position und Ausrichtung des UAVs in das globalen Koordinatensystem übertragen und z.B. eine absolute Position und Ausrichtung des UAVs in diesem übergeordneten Koordinatensystem angegeben werden.

Die Erfindung betrifft ein geodätisches Vermessungssystem mit einer geodätischen Vermessungseinheit, die als Totalstation, Theodolit, Lasertracker oder Laserscanner ausgebildet ist, mit einer Strahlquelle zur Emission eines im Wesentlichen kollimierten optischen Strahls, einer Basis, einer relativ zur Basis um zwei Achsen motorisiert schwenkbaren Anzieleinheit zur Ausrichtung einer Emissionsrichtung des optischen Strahls und Winkelmesssensoren zur Bestimmung der Ausrichtung der Anzieleinheit, sowie insbesondere mit einer Entfernungsmessfunktionalität. Zudem weist das Vermessungssystem ein auto-mobiles, unbemanntes, steuerbares Fluggerät mit einem optischen Modul auf, wobei das Fluggerät derart ausgebildet ist, dass das Fluggerät gesteuert bewegbar und im Wesentlichen positionsfest positionierbar ist. Ausserdem ist eine Auswerteeinheit vorgesehen, wobei die Auswerteeinheit derart konfiguriert ist, dass aus einer Zusammenwirkung des optischen Strahls mit dem optischen Modul ein durch eine Lage, eine Ausrichtung und/oder eine Lageänderung bestimmter Istzustand des Fluggeräts in einem Koordinatensystem bestimmbar ist. Das Vermessungssystem weist eine Steuereinheit zur Steuerung des Fluggeräts auf, wobei die Steuereinheit derart konfiguriert ist, dass anhand eines Algorithmus in Abhängigkeit des, insbesondere fortlaufend bestimmbaren, Istzustands und eines definierten Sollzustands Steuerdaten erzeugbar sind und das Fluggerät mittels der Steuerdaten in den Sollzustand, insbesondere in einen definierten Toleranzbereich um den Sollzustand, automatisch gesteuert bringbar ist.

Die Anzieleinheit der geodätischen Vermessungseinheit kann in einer Ausführungsform als eine die Strahlquelle aufweisende Emissionseinheit (mit Teleskopeinheit) ausgebildet sein. Eine derartige Ausführung kann insbesondere zum Aufbau einer Totalstation oder eines Theodoliten realisiert sein.

Hinsichtlich der Konstruktion von Lasertrackern oder Laserscannern kann die Strahlquelle beispielsweise in einer Stütze, die um eine durch die Basis definierte Stehachse relativ zur Basis schwenkbar ausgeführt ist, oder in der Basis vorgesehen sein, wobei die emittierte Strahlung mittels optischer Strahlführungselemente zur Anzieleinheit geführt werden kann. In diesem Zusammenhang kann die Anzieleinheit beispielsweise als Strahlumlenkelement (z.B. Spiegel) ausgebildet sein.

Im erfindungsgemässen geodätischen Vermessungssystem kann bei der Bestimmung des Istzustands eine Istposition, eine Istausrichtung und/oder eine Istgeschwindigkeit des Fluggeräts und/oder bei der Definition des Sollzustands eine Sollposition, eine Sollausrichtung und/oder eine Sollgeschwindigkeit berücksichtigbar sein.

In einem derartigen System kann fortlaufend ein Zustand des Fluggeräts, z.B. die Position, die Ausrichtung, die Fluggeschwindigkeit oder -ausrichtung, bestimmt werden. Die Vermessungseinheit kann dafür einen Laserstrahl emittieren, der mit einem Sensor oder Reflektor am Fluggerät wechselwirken kann. Auf Basis dieser Wechselwirkung kann dann die Zustandsermittlung für das Fluggerät durchgeführt werden. Zudem kann ein Sollzustand für das Fluggerät, beispielsweise eine Position an der das UAV positioniert werden soll, definiert werden und durch einen Vergleich des ermittelten Istzustands des Fluggeräts mit diesem Sollzustand die Steuerung des Fluggeräts derart erfolgen, dass das Fluggerät hin zum Sollzustand bewegt bzw. ausgerichtet wird und den Sollzustand einnimmt, somit also z.B. die Istposition mit der Sollposition übereinstimmt. Für diesen Regelvorgang werden anhand eines Algorithmus Steuerdaten zur Steuerung des Fluggeräts erzeugt. Dabei können z.B. einem Kalmanfilter die erzeugten Messdaten bzw. die Istposition und -ausrichtung des Fluggeräts zugeführt werden und aus der Summe der Daten die Steuerdaten unter Berücksichtigung eines definierten Sollzustands generiert werden. Zur Ermittlung der Steuerdaten können zudem aus den Messgrössen Mittelwerte abgeleitet werden. Ferner kann fortlaufend eine Differenzbildung einzelner Soll-Ist-Grössenpaare durchgeführt werden und z.B. auf Basis einer so bestimmten Positionsdifferenz eine Richtung und Entfernung zur Sollposition bestimmt und die Steuerdaten hinsichtlich Flugrichtung, Flugstrecke und Fluggeschwindigkeit abgeleitet werden. Damit können beispielsweise die Rotoren des Fluggeräts derart angesteuert werden, dass insbesondere durch unterschiedliche Rotationsgeschwindigkeiten eine gesteuerte Bewegung des Fluggeräts hin zur Sollposition erfolgt. Ausserdem kann im Rahmen des Algorithmus eine fortlaufende Neubewertung und Berechnung der Steuerdaten aus einem fortlaufenden Vergleich der Istposition mit der Sollposition erfolgen, wodurch die Position des Fluggeräts durch einen derartigen Regelkreis ständig nachgeregelt werden kann.

Das optische Modul des erfindungsgemässen geodätischen Vermessungssystems ist durch einen die Istposition des Fluggeräts angebenden Reflektor verkörpert, wobei der
Strahl mittels des Reflektors reflektierbar ist und wobei eine Entfernung von der Vermessungseinheit zum Fluggerät bestimmbar und die Istposition des Fluggeräts, insbesondere fortlaufend, aus der Entfernung und der Emissionsrichtung des Strahls ableitbar ist.

Indem z.B. mit einem Laserstrahl der Reflektor am Fluggerät angezielt wird, kann der Istzustand, insbesondere die Istposition, des Fluggeräts mit der Vermessungseinheit, z.B. mit einer Totalstation, ermittelt werden. Hierfür können der reflektierte, am Vermessungsgerät erfasste Strahl zur Entfernungsmessung und die erfassten Winkel, mit denen der Strahl emittiert wird, zur Richtungsbestimmung herangezogen werden und daraus eine Position und Ausrichtung des Fluggeräts relativ zur Position der Vermessungseinheit abgeleitet werden.

In einer nicht unter die beanspruchte Erfindung fallenden Variante kann das optische Modul eines erfindungsgemässen geodätischen Vermessungssystems durch eine Strahlerfassungseinheit verkörpert sein und der optische Strahl von der Strahlerfassungseinheit empfangbar sein, wobei eine Strahlablage aus einer Nullposition und/oder ein Einfallswinkel des Strahls mittels der Strahlerfassungseinheit, insbesondere fortlaufend, zur zumindest teilweisen Bestimmung des Istzustands bestimmbar sind, und die Steuereinheit derart konfiguriert ist, dass das Fluggerät in Abhängigkeit der Strahlablage und/oder des Einfallswinkels des Strahls positionierbar und ausrichtbar ist. Zudem kann insbesondere das Fluggerät durch die Strahlerfassungseinheit an den Strahl ankoppelbar und entlang des Strahls und/oder durch eine Änderung der Emissionsrichtung des Strahls führbar sein.

Im Rahmen dieser Variante kann durch eine Rotation des Strahls eine Führebene, insbesondere eine Laserebene, insbesondere horizontal, definierbar sein und das Fluggerät vermittels der Strahlerfassungseinheit definiert relativ zur Führebene insbesondere in der Führebene oder parallel zur Führebene, positionierbar und/oder führbar sein.

### Ebenfalls im Rahmen dieser Variante kann alternativ

zur Reflexion des Strahls am UAV dieser an der entsprechenden Erfassungseinheit empfangen werden und aus einem bestimmbaren Strahleinfallswinkel und/oder einer allfälligen Abweichung zu einer Nullposition des Auftreffpunkts auf einem Detektor in der Erfassungseinheit ein Zustand des Fluggeräts relativ zur Vermessungseinheit bestimmt werden. Basierend auf dadurch ermittelbaren Grössen kann wiederum die Steuerung des Fluggeräts - durch einen Ist-Soll-Vergleich - erfolgen und das Fluggerät in den Sollzustand gebracht werden. Mit einer derartigen Anordnung kann das UAV ausserdem an den Strahl angekoppelt werden. Dafür kann ebenfalls in Abhängigkeit der bestimmten Abweichungen des in die Strahlerfassungseinheit einfallenden Strahls das UAV so gesteuert werden, dass die Abweichungen fortlaufen ausgeglichen wird und der Strahl auf die Strahlerfassungseinheit bzw. das UAV ausgerichtet bleibt. Insbesondere kann das UAV dann zudem gesteuert werden indem die Ausrichtung des Strahls verändert wird, wobei sich das Fluggerät korrespondierend zur Ausrichtungsänderung bewegt. Die Freiheitsgrade, in denen das Fluggerät bei einer Ankopplung bewegt werden kann, können mittels der Strahlkonfiguration, d.h. beispielsweise einem ausgerichtete Strahl oder einer durch Rotation des Strahls definierten Ebene, definiert sein. Somit kann das Fluggerät auch an eine aufgespannte Ebene angekoppelt und in dieser bewegt werden, wobei dabei kein kontinuierlicher
Kontakt zwischen Strahl und Erfassungseinheit besteht, sondern dieser fortlaufend, unterbrochen in Abhängigkeit einer Rotationsfrequenz des Strahls besteht.

In dieser nicht unter die beanspruchte Erfindung fallenden Variante kann das geodätisches Vermessungssystem derart ausgeführt sein, dass die Strahlerfassungseinheit am Fluggerät derart definiert schwenkbar ist, dass der Strahl empfangbar ist. Dies kann z.B. bei einer schrägen Ausrichtung des Strahls einen Kontakt zwischen Strahl und Strahlerfassungseinheit herstellbar machen und damit eine universelle Einsetzbarkeit für das System bzw. ein breites Anwendungsspektrum für die Fluggerätssteuerung eröffnen.

Erfindungsgemäss kann das Fluggerät eine Sensoreinheit zur Bestimmung der Istausrichtung und/oder der Istgeschwindigkeit des Fluggeräts im Koordinatensystem aufweisen, insbesondere einen Neigungssensor, ein Magnetometer, einen Beschleunigungssensor, einen Drehratensensor und/oder einen Geschwindigkeitssensor, insbesondere ein GNSS-Modul. Darüber hinaus kann das Fluggerät eine die Istausrichtung angebende Markierung aufweisen, insbesondere ein definiertes Muster, ein Pseudo-Random-Pattern, einen Barcode und/oder eine Leuchtdiode, und das Vermessungssystem eine Erfassungseinheit aufweisen, insbesondere Kamera, zur Erfassung der Markierung und zur Bestimmung der Istausrichtung des Fluggeräts im Koordinatensystem aus der Lage und Anordnung der Markierung. Ausserdem kann das Vermessungssystem eine Entfernungs-Bilderfassungseinheit aufweisen, insbesondere RIM-Kamera, zur Erfassung eines Bildes des Fluggeräts, wobei eine Kontur und/oder bild-punkt-abhängige Abstandsdaten zum Fluggerät aus dem Bild ableitbar sind und daraus die Istausrichtung und/oder die Entfernung zum Fluggerät im Koordinatensystem bestimmbar ist.

Die Ausrichtung und/oder die Fluggeschwindigkeit, insbesondere die Position, des Fluggeräts können mittels einer der oben beschriebenen Anordnungen bestimmt und damit der Istzustand des Fluggeräts ermittelt werden. Unterstützend kann zudem ein GNSS-Modul an dem Fluggerät angeordnet sein und die Istposition, eine Flugrichtung und damit die Istausrichtung des Fluggeräts aus insbesondere fortlaufend empfangenen GNSS-Signalen bestimmbar sein. Somit kann z.B. bei bekannter Position der Vermessungseinheit deren Entfernung zum Fluggerät bestimmt werden und diese Information bei der Ermittlung des Istzustands und der Steuerdaten berücksichtigt werden. Zudem kann die Vermessungseinheit mit einem GNSS-Modul (zum Empfangen von GNSS-Signalen) ausgerüstet sein und damit die Position der Einheit bzw. eine Positionsrelation zum Fluggerät ermittelt werden.

Insbesondere kann erfindungsgemäss die Steuereinheit derart konfiguriert sein, dass das Fluggerät in Abhängigkeit des Istzustands und einer bestimmten Flugroute bewegbar ist, wobei die Flugroute durch einen Startpunkt und einen Endpunkt und/oder durch eine Anzahl von Wegpunkten, insbesondere automatisch, und/oder durch eine definierte Lage einer Flugachse bestimmbar ist, insbesondere wobei eine Bewegung des Fluggeräts unter Berücksichtigung des Istzustands optimierbar ist und insbesondere wobei Informationen bezüglich des Istzustands, insbesondere die Istposition, die Istausrichtung, die Istgeschwindikeit, und/oder die Entfernung zur Vermessungseinheit, einem Kalmanfilter zuführbar sind und die Bewegung des Fluggeräts unter Berücksichtigung von durch den Kalmanfilter berechneten Parametern steuerbar ist. Die Flugroute kann ferner unter Berücksichtigung der Umgebung des Fluggeräts definiert werden und dabei z.B. Hindernisse oder Richtungsänderungen in einer engen Umgebung berücksichtigen. Beispielsweise in einer Röhre kann die Route so angepasst werden, dass eine Kollisionsvermeidung mit der Röhrenwand gewährleistet wird. Zudem kann z.B. die Flugroute in Abhängigkeit eines Geländemodells, insbesondere eines CAD-Modells, definiert werden.

Ferner kann das Fluggerät eines erfindungsgemässen geodätischen Vermessungssystems einen Sensor zur, insbesondere fortlaufenden, Messung eines Objektabstands zu einem Objekt aufweisen, wobei der Objektabstand bei der Steuerung des Fluggeräts berücksichtigbar ist und/oder bei einer, insbesondere linearen horizontalen, Führung des Fluggeräts der jeweilige Objektabstand mit dem jeweiligen Istzustand, insbesondere der Istposition, derart verknüpfbar ist, dass ein Objektoberflächenverlauf, insbesondere ein Geländeschnitt, bestimmbar ist. Mit einer derartigen Ausführung kann das Fluggerät unter Berücksichtigung der Sensormessungen so gesteuert werden, dass wiederum Hindernisse erkannt und eine Kollision mit diesen vermieden werden kann. Zudem kann durch die Sensoren eine Erfassung bzw. Vermessung von Objekten, an denen das Fluggerät entlang geführt wird, erfolgen.

Ausserdem kann das Fluggerät derart steuerbar sein, dass das Fluggerät in einem bestimmten Sollabstand zum Objekt in Abhängigkeit der Messung des Objektabstands konstant führbar ist. Mit der Einhaltung eines vorgegebenen Abstands zu einem Objekt kann somit eine allfällige Kollision mit einem Hindernis vermieden werden. Zudem kann das UAV an eine Laserebene angekoppelt sein und so z.B. bei horizontaler Ausrichtung der durch einen rotierenden Laserstrahl definierten Ebene horizontal bewegt werden, wobei ein konstanter Abstand zu z.B. einer Tunnelwand beibehalten werden kann.

Weiters kann im Rahmen des geodätisches Vermessungssystems eine Position und Ausrichtung der Vermessungseinheit in einem globalen Koordinatensystem vorbestimmbar sein, wobei die Position durch einen bekannten Aufstellpunkt der Vermessungseinheit vorgebbar und/oder die Position und Ausrichtung durch eine Einmessung anhand bekannter Zielpunkte bestimmbar ist, insbesondere wobei das Koordinatensystem mit dem globalen Koordinatensystem referenzierbar ist, sodass der Istzustand des Fluggeräts im globalen Koordinatensystem bestimmbar ist. Dadurch kann das Fluggerät in Bezug zu dem übergeordneten, globalen Koordinatensystem gesteuert und der Istzustand ebenfalls bezüglich dieses Systems bestimmt werden.

In einem erfindungsgemässen geodätisches Vermessungssystem können eine Zustandsinformation, insbesondere Istzustandsinformation, Sollzustandsinformation und/oder die Entfernung zwischen der Vermessungseinheit und dem Fluggerät, zur Erzeugung von Steuerdaten und/oder die Steuerdaten zwischen der Vermessungseinheit und dem Fluggerät übertragbar sein, insbesondere wobei die Zustandsinformation mittels Funk, kabelgebunden und/oder auf den Strahl aufmoduliert übertragbar ist. Weiters kann das Vermessungssystem eine Fernsteuereinheit zur Steuerung des Fluggeräts aufweisen, wobei die Zustandsinformation und/oder die Steuerdaten zwischen der Fernsteuereinheit und der Vermessungseinheit und/oder dem Fluggerät, insbesondere mittels Funk oder über ein Kabel, übertragbar sind. Somit können Messdaten zwischen den Systemkomponenten ausgetauscht, auf einer Komponente gesammelt und die Steuerungsdaten auf dieser Komponente erzeugt werden. Beispielsweise bei einer Kopplung des Fluggeräts an den Laserstrahl kann die Information, z.B. die Entfernung oder der Istzustand, anhand eines Signals übertragen werden, das dem Laserstrahl aufmoduliert wird. So kann ein direkter Austausch der Messdaten erfolgen und z.B. die Steuerung des Fluggeräts durch eine Steuereinheit im Fluggerät basierend auf einem Vergleich des jeweils bereitgestellten Istzustands mit dem Sollzustand erfolgen.

Die Erfindung betrifft zudem ein Verfahren zum Steuern eines auto-mobilen, unbemannten, steuerbaren Fluggeräts, wobei das Fluggerät gesteuert bewegt und/oder im Wesentlichen positionsfest positioniert wird, mit einer geodätischen Vermessungseinheit, die als Totalstation, Theodolit, Lasertracker oder Laserscanner ausgebildet ist, mit einer Strahlquelle zur Emission eines im Wesentlichen kollimierten optischen Strahls, einer Basis, einer relativ zur Basis um zwei Achsen motorisiert schwenkbaren Anzieleinheit zur Ausrichtung einer Emissionsrichtung des optischen Strahls und Winkelmesssensoren zur Bestimmung der Ausrichtung der Anzieleinheit, sowie insbesondere mit einer Entfernungsmessfunktionalität. Mittels der Vermessungseinheit erfolgt ein Emittieren eines im Wesentlichen kollimierten optischen Strahls in einer Emissionsrichtung. Der optische Strahl wirkt derart mit dem Fluggerät zusammen, dass dieser am Fluggeräts reflektiert wird, wobei aus dem Zusammenwirken ein durch eine Lage, eine Ausrichtung und/oder eine Lageänderung bestimmter Istzustand des Fluggeräts in einem Koordinatensystem bestimmt wird. Weiters werden in Abhängigkeit des, insbesondere fortlaufend bestimmten, Istzustands und eines definierten Sollzustands Steuerdaten erzeugt und das Fluggerät mittels der Steuerdaten in den Sollzustand, insbesondere in einen definierten Toleranzbereich um den Sollzustand, automatisch gesteuert gebracht.

Im Rahmen des Verfahrens können beim Bestimmen des Istzustands eine Istposition, eine Istausrichtung und/oder eine Istgeschwindigkeit des Fluggeräts und/oder beim Definieren des Sollzustands eine Sollposition, eine Sollausrichtung und/oder eine Sollgeschwindigkeit berücksichtigt werden.

Weiterhin können erfindungsgemäss mittels des Reflektierens des Strahls am Fluggerät eine Entfernung von der Vermessungseinheit zum Fluggerät bestimmt und die Istposition des Fluggeräts, insbesondere fortlaufend, aus der Entfernung und der Emissionsrichtung abgeleitet werden.

In einer nicht unter die beanspruchte Erfindung fallenden Variante kann beim Empfangene des Strahls am Fluggerät eine Strahlablage aus einer Nullposition und/oder ein Einfallswinkel des Strahls, insbesondere fortlaufend, zum Bestimmen des Istzustands bestimmt werden, und das Fluggerät in Abhängigkeit der Strahlablage und/oder des Einfallswinkels des Strahls positioniert und ausgerichtet werden, insbesondere wobei das Fluggerät an den Strahl angekoppelt und entlang des Strahls und/oder durch eine Änderung der Emissionsrichtung des Strahls geführt werden kann.

Im Rahmen dieser Variante des Verfahrens kann durch ein Rotieren des Strahls eine Führebene, insbesondere eine Laserebene, insbesondere horizontal, definiert werden und das Fluggerät definiert relativ zur Führebene
insbesondere in der Führebene oder parallel zur Führebene, positioniert und/oder, geführt werden.

Erfindungsgemäss kann ein Bestimmen der Istausrichtung des Fluggeräts im Koordinatensystem in Nick-, Roll- und Gierrichtung erfolgen, insbesondere wobei das Bestimmen mittels einer internen, dem Fluggerät zugeordneten Sensoreinheit, insbesondere mittels Neigungssensor, Magnetometer, Beschleunigungssensor, Drehratensensor und/oder Geschwindigkeitssensor erfolgt. Ausserdem kann das Bestimmen der Istausrichtung im Koordinatensystem mittels Zusammenwirkens einer dem Fluggerät zugeordneten, die Istausrichtung angebenden Markierung, insbesondere eines definierten Musters, eines Pseudo-Random-Patterns, eines Barcodes und/oder einer Leuchtdiode, und einem Erfassen, insbesondere mittels Kamera, der Markierung zum Bestimmen der Istausrichtung aus einer Lage und Anordnung der Markierung erfolgen. Weiters kann das Bestimmen der Istausrichtung im Koordinatensystem mittels Erfassen eines Bildes des Fluggeräts erfolgen, wobei eine Kontur und/oder bild-punkt-abhängige Abstandsdaten zum Fluggerät aus dem Bild abgeleitet werden.

Im Rahmen des erfindungsgemässen Verfahrens kann das Fluggerät in Abhängigkeit des Istzustands und einer bestimmten Flugroute bewegt werden, wobei die Flugroute durch einen Startpunkt und einen Endpunkt und/oder durch eine Anzahl von Wegpunkten, insbesondere automatisch, und/oder durch eine definierte Lage einer Flugachse bestimmt werden kann, insbesondere wobei ein Bewegen des Fluggeräts unter Berücksichtigen des Istzustands optimiert werden kann. Alternativ oder zusätzlich können Informationen bezüglich des Istzustands, insbesondere die Istposition, die Istausrichtung, die Istgeschwindikeit, und/oder die Entfernung zur Vermessungseinheit, einem Kalmanfilter zugeführt werden und die Bewegung des Fluggeräts unter Berücksichtigen von durch den Kalmanfilter berechneten Parametern gesteuert werden.

Weiterhin kann erfindungsgemäss ein Objektabstand vom Fluggerät zu einem Objekt, insbesondere fortlaufend, gemessen werden, wobei der Objektabstand beim Steuern des Fluggeräts berücksichtigt werden kann und/oder wobei das Fluggerät (20) derart gesteuert werden kann, dass das Fluggerät (20) in einem bestimmten Sollabstand zum Objekt (81,85) in Abhängigkeit der Messung des Objektabstands konstant geführt wird.

Ferner kann im erfindungsgemässen Verfahren eine Position und Ausrichtung der Vermessungseinheit in einem globalen Koordinatensystem vorbestimmt werden, wobei die Position durch einen bekannten Aufstellpunkt der Vermessungseinheit vorgegeben sein kann und/oder die Position und Ausrichtung durch ein Einmessen anhand bekannter Zielpunkte bestimmt werden kann, insbesondere wobei das Koordinatensystem mit dem globalen Koordinatensystem referenziert werden kann, sodass der Istzustand des Fluggeräts im globalen Koordinatensystem bestimmt werden kann.

Die Erfindung betrifft zudem eine geodätische Vermessungseinheit, die als Totalstation, Theodolit, Lasertracker oder Laserscanner ausgebildet ist, für ein erfindungsgemässes System, mit einer Strahlquelle zur Emission eines im Wesentlichen kollimierten optischen Strahls, einer Basis, einer relativ zur Basis um zwei Achsen motorisiert schwenkbaren Anzieleinheit zur Ausrichtung einer Emissionsrichtung des optischen Strahls und Winkelmesssensoren zur Bestimmung der Ausrichtung der Anzieleinheit, sowie insbesondere mit einer Entfernungsmessfunktionalität. Ferner ist die Vermessungseinheit derart ausgebildet, dass Steuerdaten zur Steuerung eines auto-mobilen, unbemannten, steuerbaren Fluggeräts erzeugbar und zum Fluggerät übermittelbar sind.

Die Erfindung betrifft zudem ein Computerprogrammprodukt, das auf einem maschinenlesbaren Träger gespeichert ist, oder Computer-Daten-Signal, verkörpert durch eine elektromagnetische Welle, mit Programmcode zur Durchführung eines Erzeugens von Steuerdaten in Abhängigkeit eines, insbesondere fortlaufend bestimmten, Istzustands eines Fluggeräts und eines definierten Sollzustands durch Ausführen des oben beschriebenen erfindungsgmässen Verfahrens zum automatischen Steuern des Fluggeräts in den Sollzustand, insbesondere wenn das Programm in einer elektronischen Datenverarbeitungseinheit ausgeführt wird.

Das erfindungsgemässe Verfahren und das erfindungsgemässe System werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-c: eine erfindungsgemässe Positionierungsbewegung des Fluggeräts aus einem Istzustand hin zu einem Sollzustand;
- Fig. 2: eine erste Ausführungsform eines erfindungsgemässen Vermessungssystems mit einem unbemannten Fluggerät und einer Totalstation;
- Fig. 3: eine andere Ausführungsform eines Vermessungssystems mit einem unbemannten Fluggerät und einem Laserscanner;
- Fig. 4a-b: jeweils noch eine andere Ausführungsform eines Vermessungssystems mit einem unbemannten Fluggerät und einem Rotationslaser;
- Fig. 5a-c: drei Anwendungsformen für ein durch ein erfindungsgemässes Vermessungssystem gesteuertes Fluggerät.

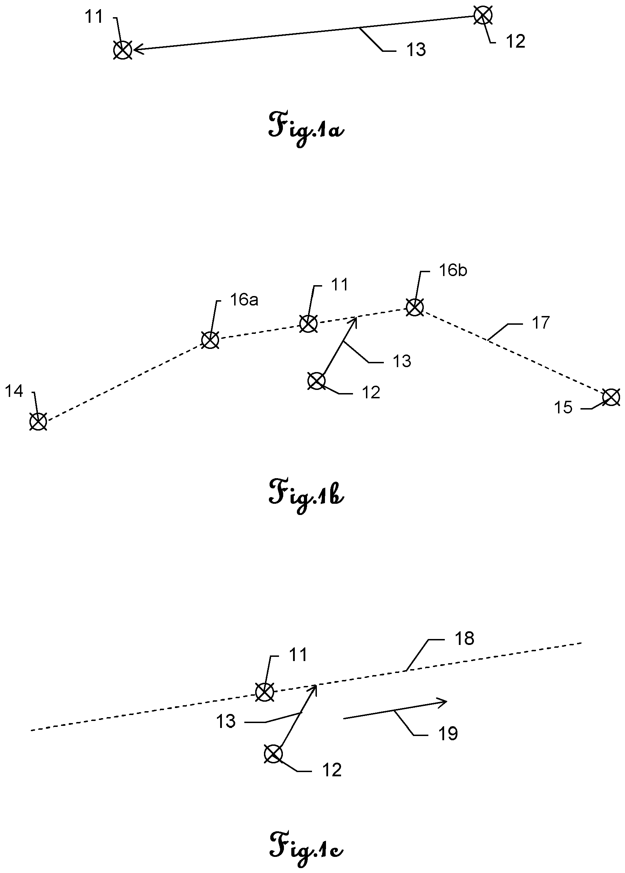

Figur 1a zeigt einen erfindungsgemässen Positionierungsvorgang für ein Fluggerät schematisch. Das Fluggerät befindet sich hierbei in einem Istzustand, der definiert wird durch eine Istposition 12, eine Istgeschwindigkeit und/oder eine Istausrichtung, und soll einen Sollzustand einnehmen. Der Sollzustand des Fluggeräts ist vorgegeben durch eine Sollposition 11 und eine Fluggeschwindigkeit (Sollgeschwindigkeit), die in der Sollposition 11 gleich Null sein soll. Zudem kann im Rahmen des Sollzustands eine Sollausrichtung des Fluggeräts festgelegt sein, wobei das Fluggerät mit einem Messsensor zur Bestimmung der Ausrichtung ausgerüstet und damit zu einer definierten Selbstausrichtung befähigt sein kann. In Abhängigkeit des Sollzustands und des Istzustands kann nun eine Korrektur 13 bestimmt werden, d.h. der Istzustand des Fluggeräts kann mit dem Sollzustand verglichen und daraus eine Differenz für die jeweilige Zustandsgrösse (Position, Geschwindigkeit, Ausrichtung) berechnet werden. Aus diesen Zustandsdifferenzen können weiters Steuerdaten bzw. - signale abgeleitet und zur Steuerung des Fluggeräts an die Motoren der Rotoren übermittelt werden. Auf Basis der Korrekturen 13 kann das Fluggerät nun mit einer bestimmten Geschwindigkeit und Ausrichtung ausgehend vom Istzustand, insbesondere von der Istposition 12, derart gesteuert werden, dass z.B. eine iterative Annäherung an den Sollzustand bzw. an die Sollposition 11 erfolgt. Dabei wird fortlaufend der Istzustand des Fluggeräts mit dem Sollzustand verglichen und daraus eine jeweilige
Korrektur 13 abgeleitet. Diese Korrektur 13 des Istzustands des Fluggeräts kann solange erfolgen, bis der Istzustand des Fluggeräts mit dem Sollzustand übereinstimmt oder die Differenz unter einem vordefinierten Schwellwert zu liegen kommt und somit nicht länger eine Korrektur 13 durchgeführt werden muss.

In Figur 1b ist eine erfindungsgemässe Positionierung eines Fluggeräts auf einer vorgegebenen Trajektorie 17 gezeigt. Die Trajektorie 17 bzw. Flugroute für das Fluggerät wird dabei durch einen Startpunkt 14 und einen Endpunkt 15 begrenzt und deren Verlauf durch weitere Wegpunkte 16a,16b definiert. Das Fluggerät befindet sich in einem Istzustand, welcher wiederum definiert sein kann durch eine Istposition 12, eine Istgeschwindigkeit und/oder eine Istausrichtung des Fluggeräts. Der Istzustand kann dabei mittels einer Auswerteeinheit bestimmt werden. Der Sollzustand (Sollposition 11) des Fluggeräts bestimmt sich in dieser Anordnung durch den Verlauf der Trajektorie 17. Auch hier werden durch einen Abgleich des Istzustands mit dem Sollzustand Korrekturen 13 ermittelt, welche in Steuersignale für das Fluggerät übersetzt und an dieses übermittelt werden. Bei der Berechnung einer Positionskorrektur 13 kann hierbei die aktuelle Ausrichtung bzw. die Flugrichtung und die Geschwindigkeit berücksichtigt werden, wodurch das Fluggerät nicht zwingend auf kürzester Distanz zur Trajektorie 17 gelenkt wird, sondern in einer optimierten Richtung und mit optimierter Geschwindigkeit zur Flugroute gesteuert wird. Beispielsweise können dadurch ein starkes Abbremsen und Beschleunigen des Fluggeräts und abrupte Richtungswechsel vermieden werden. Ausserdem kann z.B. bei den Wegpunkten 16a,16b,16c an denen eine Richtungsänderung der Flugbahn erfolgt, eine optimierte Verringerung der Fluggeschwindigkeit vorgegeben werden.

Figur 1c zeigt eine erfindungsgemässe Ausrichtung und Positionierung eines Fluggeräts auf einer vorgegebenen Achse 18. Unter Berücksichtigung des Istzustands, u.a. der Istposition 12, sowie von durch einen Benutzer übermittelte Steuersignale, die eine Vor- und Zurückbewegung des Fluggeräts entlang der Achse 18 bewirken können, können die Korrekturen 13 berechnet werden. Analog zur Positionierung gemäss Figur 1b kann die Bewegung des Fluggeräts von der Istposition 12 zur Sollposition 11 derart optimiert werden, dass insbesondere die Fluggeschwindigkeit oder von einem Benutzer zusätzlich eingegebene Steuerbefehle, wie z.B. eine Bewegungsrichtung 19, bei der Korrekturbewegung 13 berücksichtigt wird und dadurch nicht die kürzeste Strecke zwischen Istposition 12 und Achse 18 abgeflogen wird. Im gezeigten Fall kann die Korrekturbewegung 13 des Fluggeräts 20 aufgrund eines Steuerbefehls in Richtung 19 nach rechts erfolgen.

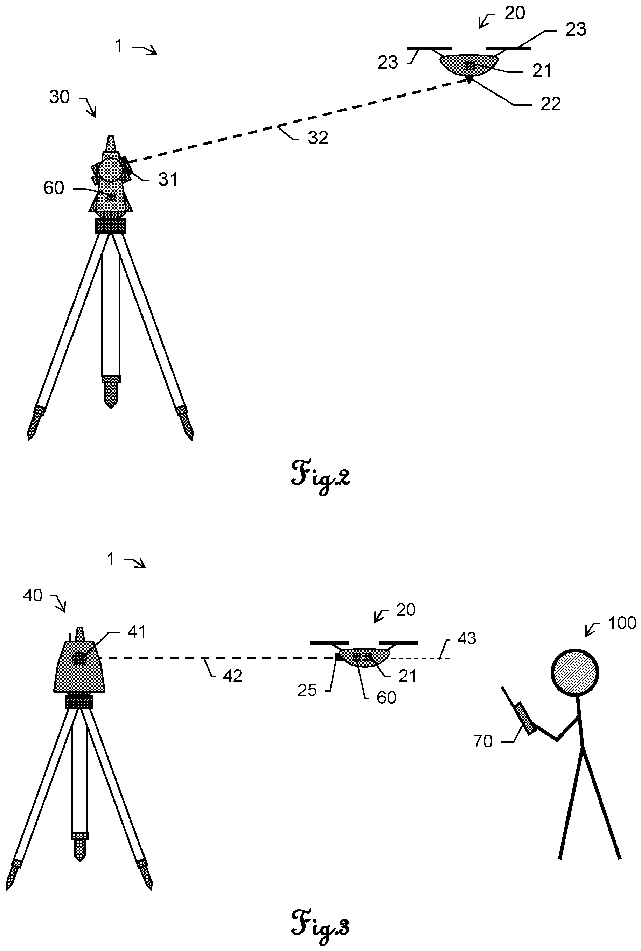

Figur 2 zeigt ein erfindungsgemässes Vermessungssystem 1 mit einem unbemannten Fluggerät 20 und einer eine Vermessungseinheit repräsentierende Totalstation 30.

Eine Erfassung des Istzustands des Fluggeräts 20, insbesondere der Istposition, kann hier durch Messungen der Totalstation 30 oder einem Laserscanner (hier nicht gezeigt) erfolgen. Die Totalstation 30 ist mit einer in zwei Achsen schwenkbaren Emissionseinheit 31 ausgestattet, womit eine Emissionsrichtung auf das Fluggerät 20 ausgerichtet werden kann. Die genaue Ausrichtung kann mit Winkelmesssensoren an der Totalstation 30 erfasst werden. Zusätzlich ist in der Emissionseinheit 31 ein Distanzmessmodul integriert, welches eine Messung einer Entfernung zu einem Reflektor 22 am Fluggerät 20 durchführbar macht. Aus den gemessenen Winkeln und der Entfernung können eine Istposition bzw. Istkoordinaten des Fluggeräts 20 bestimmt werden. Zur Bestimmung der Istausrichtung können seitens des Vermessungsgeräts, z.B. über eine in der Emissionseinheit 31 integrierten Kamera, oder über eine externe Kamera, deren Bildfeld, insbesondere über einen Spiegel, auf das Fluggerät 20 ausgerichtet werden kann, erfolgen, wobei eine Markierung, z.B. mehrere LEDs oder definierte Muster, an bekannter Position am Gehäuse des Fluggeräts 20 beobachtet und erfasst werden kann. Zudem können Messdaten über den Istzustand auch mit einer Sensoreinheit 21, welche beispielsweise einen Beschleunigungssensor, Drehratensensor, Magnetometer, Neigungssensor und/oder einen Geschwindigkeitssensor aufweist, erfasst werden.

Alle Messdaten können z.B. über Kabel oder Funk an eine Steuereinheit 60 übertragen werden, welche sich in dieser Ausführungsform in der Totalstation 30 befindet, jedoch alternativ in einer Fernsteuerung oder im Fluggerät 20 angeordnet sein kann. Aus den Messdaten kann dann mittels eines Algorithmus, z.B. mit einem Kalmanfilter, der Istzustand (Position, Geschwindigkeit, Ausrichtung) des Fluggeräts 20 berechnet werden.

Dabei können die Messdaten mit unterschiedlichen Messraten erfasst werden. So kann die Totalstation 30 z.B. die Winkel und die Entfernung mit einer Messrate von z.B. 1 Hz erfassen, während der Beschleunigungssensor die auf ihn wirkenden Beschleunigungen mit einer Rate von z.B. 100 Hz oder höher bestimmen kann. Durch eine geeignete Kombination der Sensoren kann die Positionsbestimmungen durch den Kalmanfilter so mit einer Rate von z.B. 100 Hz oder höher erfolgen, und sich damit positiv auf die Regelung des Fluggeräts auswirken. Alle Messungen, z.B. Winkel und Distanz und/oder Beschleunigungen, Neigungen und/oder Drehraten von der Sensoreinheit, können dem Kalmanfilter zugeführt werden, der kontinuierlich mit einer Rate von z.B. 100 Hz oder höher Positionskoordinaten, einen Geschwindigkeitsvektor und/oder einen Ausrichtungswinkel sowie etwaige sensorspezifische Parameter, z.B. den Bias des Beschleunigungssensors, des Fluggeräts berechnet.

Aus dem Istzustand und Steuersignalen, die beispielsweise durch einen Benutzer über eine Fernsteuerung in das System 1 eingegeben werden, können Korrekturen abgeleitet werden, wobei diese direkt oder in Form von weiteren Steuersignalen an die Motoren des Fluggeräts 20 übermittelt werden und eine korrigierte Positionierung des Fluggeräts 20 bewirken können.

In dieser hier gezeigten ersten Ausführungsform kann die Erfassung der Messdaten zur Bestimmung des Istzustands des Fluggeräts 20 über die Totalstation 30 und eine Sensoreinheit 21 erfolgen. Die Emissionseinheit 31 der Totalstation 30 kann durch eine automatische Zielerfassungsfunktion auf den Reflektor 22 am Fluggerät 20 fortlaufend ausgerichtet werden und damit das Fluggerät 20 verfolgen. Für den Fall dass die automatische Zielverfolgung aufgrund z.B. einer Sichtbehinderung die Verbindung zum Ziel (Reflektor 22) verliert, kann eine Grobposition basierend auf Messungen der Sensoreinheit 21 und/oder eines GNSS-Moduls am Fluggerät 20 an das Vermessungsgerät 30 über Funk übermittelt werden. Basierend auf dieser Information kann das Vermessungsgerät 30 das Ziel wieder auffinden, die Verbindung wieder hergestellt und die automatische Zielverfolgung wieder ausgeführt werden. Weiters kann bei einem derartigen Verbindungsverlust mit einer Kamera das Fluggerät 20 erfasst und durch Bildverarbeitung z.B. eine Kontur des Fluggeräts 20 abgeleitet und basierend darauf die Vermessungseinheit 30 neu auf das UAV 20 ausgerichtet werden. Durch das Distanzmessmodul und durch die Winkelsensoren, welche an der Totalstation 30 angeordnet sind, werden die Entfernung zum Reflektor 22 sowie die Ausrichtung der Emissionseinheit 31 und damit die Richtung eines von der Emissionseinheit 31 emittierten Strahls 32, insbesondere Messstrahls, gemessen. Die Messdaten können dann an die Steuereinheit 60 in der Totalstation 30 weitergeleitet werden.

Gleichzeitig kann mit der Sensoreinheit 21 die Ausrichtung des Fluggeräts 20 bestimmt werden. Hierfür können Messungen eines Beschleunigungssensors, eines Drehratensensors, eines Geschwindigkeitssensors, eines Neigungssensors und/oder eines Magnetometers, welche in der Sensoreinheit 21 an Bord des Fluggeräts 20 angeordnet sein können, herangezogen werden. Die somit bestimmten Messdaten können z.B. über Funk an die Steuereinheit 60 übertragen werden.

In der Steuereinheit 60 kann aus den von der Totalstation 30 und durch die Sensoreinheit 21 ermittelten Messdaten der Istzustand des Fluggeräts 20 berechnet und mit dem vorgegebenen Sollzustand abgeglichen werden. Daraus können wiederum die Korrekturen abgeleitet werden, welche über Funk an das Fluggerät 20 übermittelt werden können, und dort als Steuersignale an die Rotoren 23 zur Positionierung und Ausrichtung weitergeleitet werden.

Figur 3 zeigt eine nicht unter die beanspruchte Erfindung fallende Ausführungsform eines Vermessungssystems 1 mit einem unbemannten Fluggerät 20 und einem Laserscanner 40 als Vermessungseinheit.

Dem Fluggerät 20 wird hier durch Emission eines optischen Strahls 42 seitens des Laserscanners 40 eine Bewegungsachse 43 vorgegeben. Dazu wird der Strahl 42, insbesondere ein Laserstrahl, über einen drehbaren Spiegel 41 in einer Emissionseinheit in einer Richtung emittiert, in der das Fluggerät 20 bewegt werden soll. Beim Ankoppeln des Fluggeräts 20 an den Laserstrahl 42 wird durch eine Strahlerfassungseinheit25 eine laterale Positionsabweichung sowie eine Winkelabweichung des Fluggeräts 20 von der vorgegebenen Achse 43 bestimmt. Zusätzliche Messdaten, wie beispielsweise die Neigungen des Fluggeräts 20, können wiederum durch die Sensoreinheit 21 erfasst werden. Das Ankoppeln des Fluggeräts 20 an den Strahl 42 kann z.B. dadurch erfolgen, dass ein Benutzer 100 das Fluggerät 20 mittels Fernsteuereinheit 70 zum Laserstrahl 42 bewegt oder z.B. dadurch, dass der Laserstrahl 42 auf die Erfassungseinheit 25 gerichtet, das Fluggerät 20 angekoppelt und dann der Strahl 42 in eine definierte Richtung ausgerichtet wird, wobei das Fluggerät 20 angekoppelt bleibt und mit der Neuausrichtung des Strahls 42 entsprechend mitbewegt wird.

Die zur Bestimmung des Istzustands zu erfassenden Messdaten können hier mittels der Strahlerfassungseinheit 25 am Fluggerät 20 erfasst werden. Diese Strahlerfassungseinheit 25 kann z.B. aus einer Empfangsoptik und einem Bildsensor bestehen, wobei im aufgenommenen Bild der Laserstrahl 42 als Laserpunkt abgebildet und eine Strahlablage bzw. ein Einfallswinkel erfasst werden kann.

Je nach Bauweise der Empfangsoptik kann aus der Position des Laserpunkts im Bild die laterale Positionsabweichung oder die Winkelabweichung des Laserstrahls 42 von einer optischen Achse der Empfangsoptik bestimmt werden. Die Winkelabweichung kann mittels eines der Empfangsoptik zugeordneten Kollimators erfasst werden. Es ist auch eine Erfassungseinheit 25 denkbar, welche mit zwei Empfangsoptiken sowohl die laterale Positionsabweichung als auch die Winkelabweichung erfassen kann.

Alle Messdaten können über eine Kabelverbindung oder mittels Funk an die Steuereinheit 60 am Fluggerät übertragen und dort zur Berechnung des Istzustands des Fluggeräts verwendet werden. Zusätzlich können Steuerungsdaten von dem Benutzer 100, welche ein Vor- oder Zurückbewegung des Fluggeräts entlang der Achse 43 bewirken können, über die Fernsteuereinheit 70 an die Steuereinheit 60 gesendet werden. Aus einem Vergleich des Istzustandes mit dem Sollzustand können unter Berücksichtigung der benutzerdefinierten Steuerungsdaten Korrekturen berechnet werden, welche als Steuersignale an die Rotoren des Fluggeräts 20 übertragen werden können und eine Ausrichtung und Positionierung des Fluggeräts 20 auf dem Laserstrahl 20, d.h. eine Übereinstimmung der vorgegebenen Richtung der Bewegungsachse 43 mit einer optischen Achse der Strahlerfassungseinheit 25, bewirken. Zudem können die laterale Strahlablage sowie die Winkelablage dem Kalmanfilter, welcher insbesondere in der Steuereinheit 60 ausgeführt wird, zugeführt werden.

In dieser Ausführung lässt sich auch eine semi-autonome Steuerung des Fluggeräts 20 derart verwirklichen, dass dem System 1 die Bewegungsachse 43 als Sollzustand vorgegeben wird, entlang derer sich das Fluggerät 20 bewegen soll. Mit diesem Systems 1, welches durch das Zusammenspiel von Laserstrahl 42, Strahlerfassungseinheit 25 und gegebenenfalls zusätzlichen Messdaten der Sensoreinheit 21 arbeitet, kann das Fluggerät 20 automatisch auf der Bewegungsachse 43 gehalten werden. Die Vor- und ZurückBewegung entlang der Achse 43, d.h. eine Bewegung des Fluggeräts 20 mit einem Freiheitsgrad, kann somit in einfacher Weise durch den Benutzer 100 mittels der Fernsteuereinheit 70 erfolgen.

Soll darüber hinaus das Fluggerät 20 auf der vorgegebnen Bewegungsachse 43 in einer vorgegebnen Entfernung vom Laserscanner 40 positioniert werden, kann durch eine Distanzmessung mit dem Laserscanner 40 die Istentfernung gemessen werden. Aus einem Abgleich dieser Istentfernung mit der vorgegebenen Sollentfernung können wiederum Korrekturen berechnet werden, welche als Steuersignale zur Ansteuerung der Rotoren 23 an das Fluggerät 20 übermittelt werden und eine Positionierung des Fluggeräts 20 in der gegebenen Sollentfernung bewirken können. Da die Ausrichtung des vom Laserscanner 40 emittierten Strahls 42 und die Entfernung zum Fluggerät 20 in dieser Strahlrichtung bekannt sind, kann die Position des Fluggeräts 20 zudem exakt bestimmt bzw. die Koordinaten bezüglich eines relativen Koordinatensystems des Laserscanners 40 abgeleitet werden.

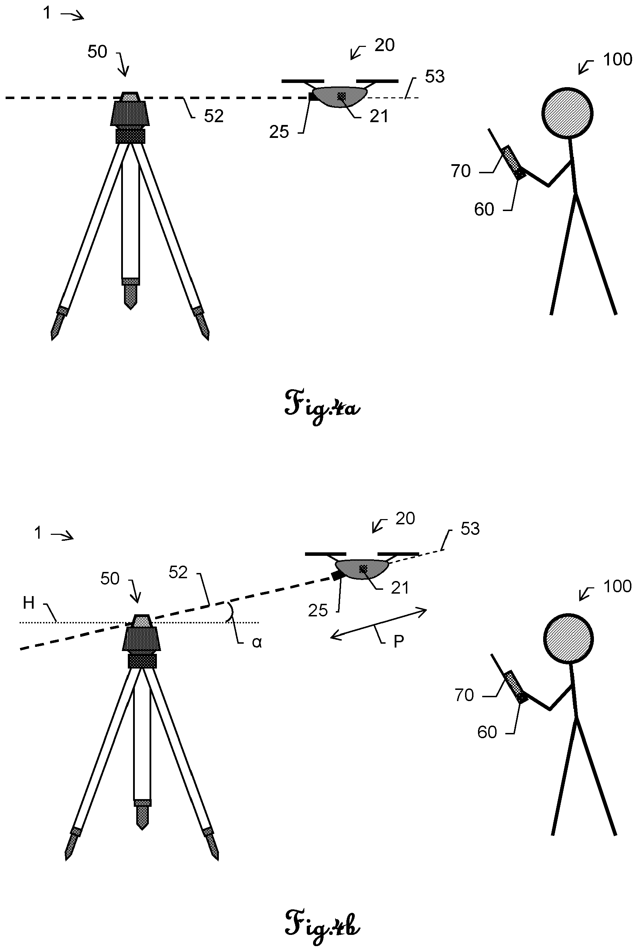

Die Figuren 4a und 4b zeigen jeweils eine weitere nicht unter die beanspruchte Erfindung fallende Ausführungsform eines Vermessungssystems 1 mit einem unbemannten Fluggerät 20 und einem Rotationslaser 50 und werden deshalb hier gemeinsam beschrieben. In diesen Ausführungen kann durch den Rotationslaser 50 bzw. durch eine rotierende Emission eines Laserstrahls 52 vom Rotationslaser 50 eine Führebene 53 bzw. Sollbewegungsebene horizontal (Fig.4a) oder in einem bestimmten Winkel α zur Horizontalen H (Fig.4b) vorgegeben werden, um das Fluggerät 20 auf konstanter Höhe zu halten und zu bewegen oder in einer definierten Richtung zu bewegen. Prinzipiell kann eine derartige Ebene auch mit einer sich drehenden Anzieleinheit einer Totalstation unter Emission eines Messstrahls definiert werden.

Bei Verwendung einer Totalstation kann abhängig von der horizontalen Lage des Fluggeräts 20 die Anzieleinheit um die vertikale Achse gedreht und somit der emittierte Messstrahl auf das Fluggerät 20 ausgerichtet werden. Beim Rotationslaser 50 kann die Ebene 53 unabhängig von der Lage des Fluggeräts 20 durch einen schnell um eine Achse rotierenden Laserstrahl 52 aufgespannt werden.

Mit der Strahlerfassungseinheit 25 kann die Abweichung des Fluggeräts 20 aus einer durch die Ebene vorgegebenen Lage, z.B. in der Höhe, erfasst werden. Die Neigung und Ausrichtung des Fluggeräts 20 kann wiederum über die Sensoreinheit 21 an Bord des Fluggeräts 20 bestimmt werden. Diese Messdaten werden über Funk an die Steuereinheit 60, die in der Fernsteuereinheit 70 integriert ist, des Benutzers 100 übertragen. Dort kann so der Istzustand des Fluggeräts 20 berechnet werden. Aus einem Vergleich des Istzustandes mit dem Sollzustand, der hier z.B. einer Positionierung und Ausrichtung des Fluggeräts 20 auf der definierten Laserebene 53 entspricht, werden unter Berücksichtigung gegebenenfalls zusätzlicher vom
Benutzer 100 erzeugter Steuerdaten Korrekturen berechnet, welche als Steuersignale zur Ansteuerung der Rotoren 23 an das Fluggerät 20 übermittelt werden und eine Positionierung des Fluggeräts 20 in dem vorgegebenen Sollzustand, d.h. eine Positionierung und/oder Bewegung des Fluggeräts 20 in der Führebene 53, bewirken können.

Somit kann eine automatische fortlaufende Änderung der Höhe des Fluggeräts 20 derart erfolgen, dass dieses auf der vorgegebenen horizontalen Ebene 53 positioniert wird (Fig.4a). Die Veränderung der Lage des Fluggeräts 20 in der Ebene 53 kann ferner durch den Benutzer 100 mittels der Fernsteuerung 70, welche als Smartphone oder Tablet-PC realisiert sein kann, herbeigeführt werden. Der Benutzer 100 kann somit das Fluggerät 20 in der Ebene 53, d.h. mit zwei verbleibenden Freiheitsgraden, bewegen.

Bei einer nicht-horizontalen Ausrichtung der Ebene 53 gemäss Figur 4b kann die Strahlerfassungseinheit 25 in einem entsprechenden Winkel an dem Fluggerät 20 angeordnet sein bzw. die Ausrichtung der Erfassungseinheit 25 durch eine Schwenkvorrichtung an den Winkel α der Ebene 53 angepasst werden. Bei einer solchen Anordnung kann der Benutzer 100 das Fluggerät 20 mit zwei Freiheitsgraden auf dieser schrägen Ebene 53 - angezeigt durch den Pfeil P - frei bewegen.

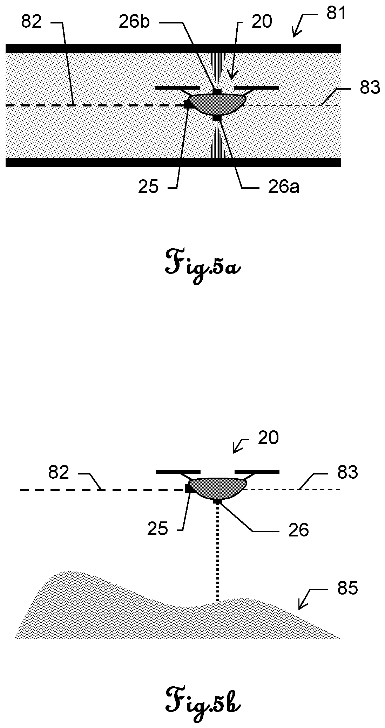

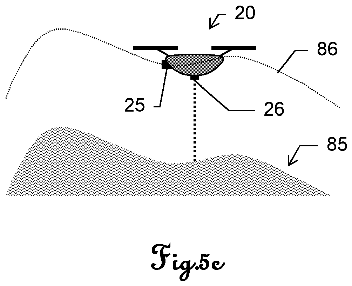

Die Figuren 5a, 5b und 5c zeigen drei Anwendungsformen für ein durch ein erfindungsgemässes Vermessungssystem gesteuertes Fluggerät 20.

In Figur 5a ist ein Fluggerät 20 gezeigt, das eine Strahlerfassungseinheit 23 aufweist, auf die ein Laserstrahl 82 ausgerichtet ist. Hiermit kann das Fluggerät 20 entlang einer Bewegungsachse 83 geführt werden. Der Laserstrahl 82 ist koaxial zur Achse einer Röhre 81 ausgerichtet, die somit mit der Bewegungsachse 83 übereinstimmt. Mit dieser Anordnung kann das Fluggerät 20, durch die mittels der Strahlerfassungseinheit 23 bereitgestellte kontinuierliche Führung entlang des Strahls 82, beispielsweise in einer engen Röhre 81 derart bewegt werden, dass der Abstand zur Röhrenwand konstant gehalten und eine Kollision mit der Röhrenwand vermieden werden kann. Zudem kann das Fluggerät 20 über Abstandsmesssensoren 26a,26b, z.B. Scanner, verfügen, die fortlaufend Abstände zur Röhrenwand erfassen und Messdaten bereitstellen. Diese Daten können zusätzlich zur Steuerung des Fluggeräts 20 herangezogen und bei der Berechnung von Korrekturenwerten zur Änderung des Fluggerätezustands berücksichtigt werden. Ein Benutzer kann somit das Fluggerät 20, insbesondere mittels einer Fernsteuerung, sehr einfach manuell in dem Rohr 81 vor und zurück bewegen und positionieren.

In Figur 5b wird eine weitere Anwendung für ein erfindungsgemäss geführt gesteuertes Fluggerät 20 gezeigt. Dabei soll ein Gelände 85 vermessen werden. Hierfür kann wiederum ein Laserstrahl 82 in Richtung einer horizontalen Achse 83 ausgerichtet und das Fluggerät 20 mittels einer Strahlempfangseinheit 25, insbesondere anhand der Strahlablage und/oder des Einfallswinkels, an diesem Strahl 82 entlang bewegt werden. Mit einem zusätzlichen Sensor 26, der in Lotrichtung nach unten ausrichtbar ist, kann eine Entfernungsmessung zur Geländeoberfläche während eines Überfliegens des Geländes 85 fortlaufend durchgeführt werden. Daraus kann jeweils ein Abstand zwischen der Achse 83 und dem Gelände abgeleitet und durch eine Verknüpfung dieser Abstandswerte mit der jeweiligen Istposition des Fluggeräts 20 ein Geländeprofil bzw. ein Geländeschnitt erstellt werden.

In Figur 5c wird eine weitere Anwendung für ein erfindungsgemäss gesteuertes Fluggerät 20 gezeigt. Das Fluggerät 20 wird hier wiederum in einer durch eine Vermessungseinheit definierten vertikalen Ebene (nicht gezeigt) mittels der Strahlempfangseinheit 25 geführt. Mit dem Abstandsmesssensor 26 wird während der Bewegung des Fluggeräts 20 eine Distanz zu einer Oberfläche eines Objekts 85 gemessen und für die Bestimmung einer
Flugroute 86 für das Fluggerät 20 herangezogen. Durch diese fortlaufende Messung kann bei der Bewegung des Fluggeräts 20 ein konstanter Abstand zum Objekt 85 eingehalten und damit eine Kollision mit dem Objekt vermieden werden.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Steuern von Fluggeräten und mit Vermessungsgeräten des Stands der Technik kombiniert werden.

## Patentansprüche

1. Geodätisches Vermessungssystem (1) mit
• einer geodätischen Vermessungseinheit (30,40,50) ausgebildet als Totalstation, Theodolit oder Lasertracker, mit
□ einer Strahlquelle zur Emission eines im Wesentlichen kollimierten optischen Strahls (32,42,52,82),
□ einer Basis,
□ einer relativ zur Basis um zwei Achsen motorisiert schwenkbaren Anzieleinheit zur Ausrichtung einer Emissionsrichtung des optischen Strahls (32,42,52,82) und
□ Winkelmesssensoren zur Bestimmung der Ausrichtung der Anzieleinheit,
□ sowie mit einer Entfernungsmessfunktionalität,
• einem auto-mobilen, unbemannten, steuerbaren Fluggerät (20) mit einem optischen Modul (22,25), wobei das Fluggerät (20) derart ausgebildet ist, dass das Fluggerät (20) gesteuert bewegbar und/oder im Wesentlichen positionsfest positionierbar ist, und
• einer Auswerteeinheit, wobei die Auswerteeinheit derart konfiguriert ist, dass aus einer Zusammenwirkung des optischen Strahls (32,42,52,82) mit dem optischen Modul (22,25) ein durch eine Lage, eine Ausrichtung und/oder eine Lageänderung bestimmter Istzustand des Fluggeräts (20) in einem Koordinatensystem bestimmbar ist, wobei bei der Bestimmung des Istzustands eine Istposition des Fluggeräts (20) berücksichtigbar ist,
**dadurch gekennzeichnet, dass**
• das Vermessungssystem (1) eine Steuereinheit (60) zur Steuerung des Fluggeräts (20) aufweist, wobei die Steuereinheit (60) derart konfiguriert ist, dass anhand eines Algorithmus in Abhängigkeit des, insbesondere fortlaufend bestimmbaren, Istzustands und eines definierten Sollzustands Steuerdaten erzeugbar sind und das Fluggerät (20) mittels der Steuerdaten in den Sollzustand, insbesondere in einen definierten Toleranzbereich um den Sollzustand, automatisch gesteuert bringbar ist, und
• das optische Modul (22,25) durch einen die Istposition des Fluggeräts (20) angebenden Reflektor (22) verkörpert und der Strahl (32,42,52,82) mittels des Reflektors (22) reflektierbar ist, wobei das optische Modul (22,25) zur derartigen Reflexion des Strahls (32,42,52,82) ausgebildet ist, dass mittels der Reflexion des Strahls (32,42,52,82) an dem optischen Modul (22,25) eine Entfernung von der Vermessungseinheit (30,40,50) zum Fluggerät (20) bestimmbar und die Istposition des Fluggeräts (20), insbesondere fortlaufend, aus der Entfernung und der Emissionsrichtung des Strahls (32,42,52,82) ableitbar ist.

2. Geodätisches Vermessungssystem (1) nach Anspruch 1,
**dadurch gekennzeichnet, dass**
bei der Bestimmung des Istzustands eine Istausrichtung und/oder eine Istgeschwindigkeit des Fluggeräts (20) und/oder bei der Definition des Sollzustands eine Sollposition, eine Sollausrichtung und/oder eine Sollgeschwindigkeit berücksichtigbar sind.

3. Geodätisches Vermessungssystem (1) nach Anspruch 2,
**dadurch gekennzeichnet, dass**
• das Fluggerät (20) eine Sensoreinheit (21) zur Bestimmung der Istausrichtung und/oder der Istgeschwindigkeit des Fluggeräts (20) im Koordinatensystem aufweist
und/oder
• das Fluggerät (20) eine die Istausrichtung angebende Markierung aufweist und
• das Vermessungssystem (1) eine Erfassungseinheit aufweist zur Erfassung der Markierung und zur Bestimmung der Istausrichtung des Fluggeräts (20) im Koordinatensystem aus der Lage und Anordnung der Markierung.

4. Geodätisches Vermessungssystem (1) nach einem der Ansprüche 1 bis 3,
**dadurch gekennzeichnet, dass**
die Steuereinheit (60) derart konfiguriert ist, dass das Fluggerät (20) in Abhängigkeit des Istzustands und einer bestimmten Flugroute (17) bewegbar ist, wobei die Flugroute (17) durch einen Startpunkt (14) und einen Endpunkt (15) und/oder durch eine Anzahl von Wegpunkten (16a,16b), insbesondere automatisch, und/oder durch eine definierte Lage einer Flugachse (18) bestimmbar ist,
insbesondere wobei
Informationen bezüglich des Istzustands einem Kalmanfilter zuführbar sind und die Bewegung des Fluggeräts (20) unter Berücksichtigung von durch den Kalmanfilter berechneten Parametern steuerbar ist.

5. Geodätisches Vermessungssystem (1) nach einem der Ansprüche 1 bis 4,
**dadurch gekennzeichnet, dass**
das Fluggerät (20) einen Sensor (26,26a,26b) zur Messung eines Objektabstands zu einem Objekt (81,85) aufweist.

6. Geodätisches Vermessungssystem (1) nach Anspruch 5,
**dadurch gekennzeichnet, dass**
• der Objektabstand bei der Steuerung des Fluggeräts (20) berücksichtigbar ist und/oder
• das Fluggerät (20) derart steuerbar ist, dass das Fluggerät (20) in einem bestimmten Sollabstand zum Objekt (81,85) in Abhängigkeit der Messung des Objektabstands konstant führbar ist.

7. Geodätisches Vermessungssystem (1) nach einem der Ansprüche 1 bis 6,
**dadurch gekennzeichnet, dass**
eine Zustandsinformation zur Erzeugung der Steuerdaten und/oder die Steuerdaten zwischen der Vermessungseinheit (30,40,50) und dem Fluggerät (20) übertragbar sind.

8. Verfahren zum Steuern eines auto-mobilen, unbemannten, steuerbaren Fluggeräts (20), wobei das Fluggerät (20) gesteuert bewegt und/oder im Wesentlichen positionsfest positioniert wird, mit einer geodätischen Vermessungseinheit (30,40,50) ausgebildet als Totalstation, Theodolit oder Lasertracker, mit
• einer Strahlquelle zur Emission eines im Wesentlichen kollimierten optischen Strahls (32,42,52,82),
• einer Basis,
• einer relativ zur Basis um zwei Achsen motorisiert schwenkbaren Anzieleinheit zur Ausrichtung einer Emissionsrichtung des optischen Strahls (32,42,52,82) und
• Winkelmesssensoren zur Bestimmung der Ausrichtung der Anzieleinheit,
• sowie mit einer Entfernungsmessfunktionalität,
wobei
• mittels der Vermessungseinheit (30,40,50) ein Emittieren des im Wesentlichen kollimierten optischen Strahls (32,42,52,82) in einer Emissionsrichtung erfolgt,
• der optische Strahl (32,42,52,82) derart mit dem Fluggerät (20) zusammenwirkt, dass dieser von einem eine Istposition des Fluggeräts (20) angebenden Reflektor (22) am Fluggerät (20) reflektiert wird, und
• aus dem Zusammenwirken ein durch eine Lage, eine Ausrichtung und/oder eine Lageänderung bestimmter Istzustand des Fluggeräts (20) in einem Koordinatensystem bestimmt wird, wobei beim Bestimmen des Istzustands die Istposition des Fluggeräts (20) berücksichtigt wird,
**dadurch gekennzeichnet, dass**
• in Abhängigkeit des, insbesondere fortlaufend bestimmten, Istzustands und eines definierten Sollzustands Steuerdaten erzeugt werden und das Fluggerät (20) mittels der Steuerdaten in den Sollzustand, insbesondere in einen definierten Toleranzbereich um den Sollzustand, automatisch gesteuert gebracht wird, und
• mittels des Reflektierens des Strahls (32,42,52,82) am Fluggerät (20) eine Entfernung von der Vermessungseinheit (30,40,50) zum Fluggerät (20) bestimmt und die Istposition des Fluggeräts (20), insbesondere fortlaufend, aus der Entfernung und der Emissionsrichtung abgeleitet wird.

9. Verfahren nach Anspruch 8,
**dadurch gekennzeichnet, dass**
beim Bestimmen des Istzustands eine Istausrichtung und/oder eine Istgeschwindigkeit des Fluggeräts (20) und/oder beim Definieren des Sollzustands eine Sollposition, eine Sollausrichtung und/oder eine Sollgeschwindigkeit berücksichtigt werden.

10. Verfahren nach Anspruch 9,
**dadurch gekennzeichnet, dass**
ein Bestimmen der Istausrichtung des Fluggeräts (20) im Koordinatensystem in Nick-, Roll- und Gierrichtung erfolgt, insbesondere wobei das Bestimmen mittels einer internen, dem Fluggerät (20) zugeordneten Sensoreinheit (21) erfolgt
und/oder
das Bestimmen der Istausrichtung im Koordinatensystem mittels Zusammenwirkens
• einer dem Fluggerät (20) zugeordneten, die Istausrichtung angebenden Markierung und
• einem Erfassen der Markierung zum Bestimmen der Istausrichtung aus einer Lage und Anordnung der Markierung erfolgt.

11. Verfahren nach einem der Ansprüche 8 bis 10,
**dadurch gekennzeichnet, dass**
das Fluggerät (20) in Abhängigkeit des Istzustands und einer bestimmten Flugroute (17) bewegt wird, wobei die Flugroute (17) durch einen Startpunkt (14) und einen Endpunkt (15) und/oder durch eine Anzahl von Wegpunkten (16a,16b) und/oder durch eine definierte Lage einer Flugachse (18) bestimmt wird,
insbesondere wobei
Informationen bezüglich des Istzustands einem Kalmanfilter zugeführt werden und die Bewegung des Fluggeräts (20) unter Berücksichtigen von durch den Kalmanfilter berechneten Parametern gesteuert wird.

12. Verfahren nach einem der Ansprüche 8 bis 11,
**dadurch gekennzeichnet, dass**
• ein Objektabstand vom Fluggerät (20) zu einem Objekt (81,85), insbesondere fortlaufend, gemessen wird, wobei
• der Objektabstand beim Steuern des Fluggeräts (20) berücksichtigt wird, und/oder
• das Fluggerät (20) derart gesteuert wird, dass das Fluggerät (20) in einem bestimmten Sollabstand zum Objekt (81,85) in Abhängigkeit der Messung des Objektabstands konstant geführt wird.

13. Verfahren nach einem der Ansprüche 8 bis 12,
**dadurch gekennzeichnet, dass**
eine Position und Ausrichtung der Vermessungseinheit (30,40,50) in einem globalen Koordinatensystem vorbestimmt ist, wobei die Position durch einen bekannten Aufstellpunkt der Vermessungseinheit (30,40,50) vorgegeben wird und/oder die Position und Ausrichtung durch ein Einmessen anhand bekannter Zielpunkte bestimmt wird,
insbesondere wobei das Koordinatensystem mit dem globalen Koordinatensystem referenziert wird, sodass der Istzustand des Fluggeräts (20) im globalen Koordinatensystem bestimmt wird.

14. Geodätische Vermessungseinheit (30,40,50) ausgebildet als Totalstation, Theodolit oder Lasertracker zur Verwendung in einem System nach einem der Ansprüche 1 bis 7, mit
• einer Strahlquelle zur Emission eines im Wesentlichen kollimierten optischen Strahls (32,42,52,82),
• einer Basis,
• einer relativ zur Basis um zwei Achsen motorisiert schwenkbaren Anzieleinheit zur Ausrichtung einer Emissionsrichtung des optischen Strahls (32,42,52,82) und
• Winkelmesssensoren zur Bestimmung der Ausrichtung der Anzieleinheit,
• sowie mit einer Entfernungsmessfunktionalität,
**dadurch gekennzeichnet, dass**
die Vermessungseinheit (30,40,50) derart ausgebildet ist, dass Steuerdaten zur Steuerung eines auto-mobilen, unbemannten, steuerbaren Fluggeräts (20) erzeugbar und zum Fluggerät (20) übermittelbar sind.

15. Computerprogrammprodukt, das auf einem maschinenlesbaren Träger gespeichert ist, oder Computer-Daten-Signal, verkörpert durch eine elektromagnetische Welle, mit Programmcode zur Durchführung eines Erzeugens von Steuerdaten in Abhängigkeit
• eines, insbesondere fortlaufend bestimmten, Istzustands eines Fluggeräts (20) und
• eines definierten Sollzustands
zum automatischen Steuern des Fluggeräts (20) in den Sollzustand durch Ausführung eines Verfahrens_nach einem der Ansprüche 8 bis 13, wenn das Programm in einer elektronischen Datenverarbeitungseinheit ausgeführt wird.

## Claims

1. A geodetic measuring system (1) with
• a geodetic measuring unit (30, 40, 50), in particular a total station, theodolite, laser tracker or laser scanner, with
∘ a beam source for emitting a substantially collimated optical beam (32, 42, 52, 82),
∘ a base,
∘ a sighting unit which can be pivoted by motor about two axes relative to the base for aligning an emission direction of the optical beam (32, 42, 52, 82) and
∘ angle measurement sensors for determining the alignment of the sighting unit,
∘ and with a ranging functionality,
• a self-propelled, unmanned, controllable aerial vehicle (20) with an optical module (22, 25), wherein the aerial vehicle (20) is designed in such a way that the aerial vehicle (20) can be moved in a controlled fashion and/or positioned at a substantially fixed position, and
• an evaluation unit, wherein the evaluation unit is configured in such a way that it is possible to determine an actual state of the aerial vehicle (20) in a coordinate system, determined by a position, an alignment and/or a change in position, from an interaction of the optical beam (32, 42, 52, 82) with the optical module (22, 25), wherein it is possible to take account of an actual position of the aerial vehicle (20) when determining the actual state,
**characterized in that**
• the measuring system (1) comprises a control unit (60) for controlling the aerial vehicle (20), wherein the control unit (60) is configured in such a way that, on the basis of an algorithm depending on the actual state, which can in particular be determined continuously, and a defined intended state, control data can be produced and the aerial vehicle (20) can be brought into the intended state, in particular into a defined tolerance range about the intended state, in an automatically controlled fashion by means of the control data, and
• the optical module (22, 25) is embodied by a reflector (22) which specifies the actual position of the aerial vehicle (20) and the beam (32, 42, 52, 82) can be reflected by means of the reflector (22), wherein the optical module (22, 25) is configured for reflecting the beam (32, 42, 52, 82) in such a way that a distance from the measuring unit (30, 40, 50) to the aerial vehicle (20) can be determined by means of reflecting the beam (32, 42, 52, 82) at the optical module (22, 25) and the actual position of the aerial vehicle (20) is derivable, in particular continuously, from the distance and the emission direction of the beam (32, 42, 52, 82) .

2. The geodetic measuring system (1) as claimed in claim 1,
**characterized in that**
it is possible to take account of an actual alignment and/or an actual velocity of the aerial vehicle (20) when determining the actual state and/or it is possible to take account of an intended position, an intended alignment and/or an intended velocity when defining the intended state.

3. The geodetic measuring system (1) as claimed in claim 2,
**characterized in that**
the aerial vehicle (20) has a sensor unit (21) for determining the actual alignment and/or the actual velocity of the aerial vehicle (20) in the coordinate system,
and/or
• the aerial vehicle (20) has a marking specifying the actual alignment, and
• the measuring system (1) has a detection unit for detecting the marking and for determining the actual alignment of the aerial vehicle (20) in the coordinate system from the position and arrangement of the marking.

4. The geodetic measuring system (1) as claimed in any one of claims 1 to 3,
**characterized in that**
the control unit (60) is configured in such a way that the aerial vehicle (20) can be moved depending on the actual state and a specific flight route (17), wherein the flight route (17) can be determined by a start point (14) and an end point (15) and/or by a number of waypoints (16a, 16b), in particular automatically, and/or by a defined position of a flight axis (18),
in particular wherein
information relating to the actual state can be fed to a Kalman filter and the movement of the aerial vehicle (20) can be controlled taking into account parameters calculated by the Kalman filter.

5. The geodetic measuring system (1) as claimed in any one of claims 1 to 4,
**characterized in that**
the aerial vehicle (20) has a sensor (26, 26a, 26b) for measuring an object distance to an object (81, 85).

6. The geodetic measuring system (1) as claimed in claim 5,
**characterized in that**
• the object distance can be taken into account when controlling the aerial vehicle (20) and/or
• the aerial vehicle (20) can be controlled in such a way that the aerial vehicle (20) can be guided constantly at a specific intended distance from the object (81, 85) depending on the measurement of the object distance.

7. The geodetic measuring system (1) as claimed in any one of claims 1 to 6,
**characterized in that**
state information for producing the control data and/or the control data can be transmitted between the measuring unit (30, 40, 50) and the aerial vehicle (20).

8. A method for controlling a self-propelled, unmanned, controllable aerial vehicle (20), wherein the aerial vehicle (20) can be moved in a controlled fashion and/or positioned at a substantially fixed position, with a geodetic measuring unit (30, 40, 50), in particular a total station, theodolite, laser tracker or laser scanner, with
• a beam source for emitting a substantially collimated optical beam (32, 42, 52, 82),
• a base,
• a sighting unit which can be pivoted by motor about two axes relative to the base for aligning an emission direction of the optical beam (32, 42, 52, 82) and
• angle measurement sensors for determining the alignment of the sighting unit,
• and with a ranging functionality,
wherein
• the measuring unit (30, 40, 50) is used to bring about an emission of the substantially collimated optical beam (32, 42, 52, 82) in an emission direction,
• the optical beam (32, 42, 52, 82) interacts with the aerial vehicle (20) in such a way that the former is reflected at a reflector (22) on the aerial vehicle (20), which reflector (22) specifies an actual position of the aerial vehicle (20), and
• an actual state of the aerial vehicle (20) in a coordinate system is determined from the interaction, which actual state is determined by a position, an alignment and/or a change in position, wherein the actual position of the aerial vehicle (20) is taken into account when determining the actual state,
**characterized in that**
• control data are produced depending on the actual state, which is in particular determined continuously, and a defined intended state and the aerial vehicle (20) is brought into the intended state, in particular in a defined tolerance range about the intended state, in an automatically controlled fashion by means of the control data, and
• a distance from the measuring unit (30, 40, 50) to the aerial vehicle (20) is determined by means of reflecting the beam (32, 42, 52, 82) at the aerial vehicle (20) and the actual position of the aerial vehicle (20) is derived, in particular continuously, from the distance and the emission direction.

9. The method as claimed in claim 8,
**characterized in that**
an actual alignment and/or an actual velocity of the aerial vehicle (20) are taken into account when determining the actual state and/or an intended position, an intended alignment and/or an intended velocity are taken into account when defining the intended state.

10. The method as claimed in claim 9,
**characterized in that**
the actual alignment of the aerial vehicle (20) is determined in the coordinate system in the pitch, roll and yaw directions, in particular wherein determination takes place by means of an internal sensor unit (21) associated with the aerial vehicle (20),
and/or
the actual alignment in the coordinate system is determined by means of an interaction of
• a marking, which is associated with the aerial vehicle (20) and which specifies the actual alignment and
• a detection of the marking for determining the actual alignment from a position and arrangement of the marking.

11. The method as claimed in any one of claims 8 to 10,
**characterized in that**
the aerial vehicle (20) is moved dependent on the actual state and a specific flight route (17), wherein the flight route (17) is determined by a start point (14) and an end point (15) and/or by a number of waypoints (16a, 16b) and/or by a defined position of a flight axis (18),
in particular wherein
information in respect of the actual state are fed to a Kalman filter and the movement of the aerial vehicle (20) is controlled taking into account parameters calculated by the Kalman filter.

12. The method as claimed in any one of claims 8 to 11,
**characterized in that**
• an object distance from the aerial vehicle (20) to an object (81, 85) is measured, in particular continuously, wherein
• the object distance is taken into account when controlling the aerial vehicle (20), and/or
• the aerial vehicle (20) is controlled in such a way that the aerial vehicle (20) is guided constantly at a specific intended distance from the object (81, 85) depending on the measurement of the object distance.

13. The method as claimed in any one of claims 8 to 12,
**characterized in that**
a position and alignment of the measuring unit (30, 40, 50) is predetermined in a global coordinate system, wherein the position is predetermined by a known setup point of the measuring unit (30, 40, 50) and/or the position and alignment is determined by calibration on the basis of known target points, in particular wherein the coordinate system is referenced with the global coordinate system such that the actual state of the aerial vehicle (20) is determined in the global coordinate system.

14. A geodetic measuring unit (30, 40, 50), in particular a total station, theodolite, laser tracker or laser scanner, for a system as claimed in any one of claims 1 to 7, with
• a beam source for emitting a substantially collimated optical beam (32, 42, 52, 82),
• a base,
• a sighting unit which can be pivoted by motor about two axes relative to the base for aligning an emission direction of the optical beam (32, 42, 52, 82) and
• angle measurement sensors for determining the alignment of the sighting unit,
• and with a ranging functionality,
**characterized in that**
the measuring unit (30, 40, 50) is embodied in such a way that control data for controlling a self-propelled, unmanned, controllable aerial vehicle (20) can be generated and transmitted to the aerial vehicle (20).

15. A computer program product, which is stored on a machine-readable medium, or computer data signal, embodied by an electromagnetic wave, with program code for carrying out a producing of control data depending on
• an actual state, which in particular is determined continuously, of an aerial vehicle (20) and
• a defined intended state
for automatically controlling the aerial vehicle (20) into the intended state by carrying out a method as claimed in any one of claims 8 to 13, if the program is carried out in an electronic data processing unit.

## Revendications

1. Système de mesure géodésique (1) comportant
• une unité de mesure géodésique (30, 40, 50) sous la forme d'une station totale, d'un théodolite ou d'un laser de relevé, comportant
∘ une source de rayonnement destinée à émettre un faisceau optique essentiellement collimaté (32, 42, 52, 82),
∘ une base,
∘ une unité de visée basculable de manière motorisée autour de deux axes par rapport à la base, destinée à orienter la direction d'émission du faisceau optique (32, 42, 52, 82),
∘ des capteurs de mesure d'angle destinés à déterminer l'orientation de l'unité de visée, et
∘ une fonctionnalité de mesure de distance,
• un appareil volant (20) automoteur et télépilotable, comportant un module optique (22, 25), ledit appareil volant (20) étant conçu de manière à être pilotable en déplacement et/ou en positionnement essentiellement stationnaire, et
• une unité d'évaluation conçue de manière à permettre la détermination, par interaction du faisceau optique (32, 42, 52, 82) et du module optique (22, 25), d'un état réel de l'appareil volant (20) dans un système de coordonnées, ledit état réel étant déterminé au moyen d'une position, d'une orientation et/ou d'une modification de position, et ladite détermination pouvant tenir compte d'une position réelle de l'appareil volant (20),
**caractérisé en ce que**
• le système de mesure (1) présente une unité de pilotage (60) destinée au pilotage de l'appareil volant (20) et conçue de manière à permettre la production de données de pilotage au moyen d'un algorithme, en fonction de l'état réel, notamment déterminable en continu, et d'un état souhaité défini, et à permettre de faire passer l'appareil volant (20) à l'état souhaité, notamment dans un domaine de tolérance défini autour de l'état souhaité, par pilotage automatique au moyen des données de pilotage, et
• le module optique (22, 25) est constitué par un réflecteur (22) indiquant la position réelle de l'appareil volant (20) et le faisceau (32, 42, 52, 82) peut être réfléchi par le réflecteur (22), le module optique (22, 25) étant conçu pour réfléchir le faisceau (32, 42, 52, 82) de manière que la réflexion du faisceau (32, 42, 52, 82) par le module optique (22, 25) permette de déterminer la distance entre l'unité de mesure (30, 40, 50) et l'appareil volant (20) et de déduire la position réelle de l'appareil volant (20), notamment en continu, à partir de ladite distance et de la direction d'émission du faisceau (32, 42, 52, 82).

2. Système de mesure géodésique (1) selon la revendication 1,
**caractérisé en ce que**
il est possible de tenir compte d'une orientation réelle et/ou d'une vitesse réelle de l'appareil volant (20) lors de la détermination de l'état réel, et/ou d'une position souhaitée, d'une orientation souhaitée et/ou d'une vitesse souhaitée lors de la définition de l'état souhaité.

3. Système de mesure géodésique (1) selon la revendication 2,
**caractérisé en ce que**
• l'appareil volant (20) présente une unité de captage (21) destinée à déterminer l'orientation réelle et/ou la vitesse réelle de l'appareil volant (20) dans le système de coordonnées
et/ou
• l'appareil volant (20) présente un repère indiquant l'orientation réelle et
• le système de mesure (1) présente une unité de détection destinée à détecter le repère et à déterminer l'orientation réelle de l'appareil volant (20) dans le système de coordonnées à partir de la position et de la disposition du repère.

4. Système de mesure géodésique (1) selon l'une des revendications 1 à 3,
**caractérisé en ce que**
l'unité de pilotage (60) est conçue de manière à permettre le déplacement de l'appareil volant (20) en fonction de l'état réel et d'un certain itinéraire de vol (17), ledit itinéraire de vol (17) pouvant être déterminé par un point de départ (14) et un point d'arrivée (15) et/ou par une pluralité de points intermédiaires (16a, 16b), notamment de manière automatique, et/ou par une orientation définie d'un axe de vol (18),
notamment dans lequel
des informations relatives à l'état réel peuvent être transmises à un filtre de Kalman et le déplacement de l'appareil volant (20) peut être commandé en tenant compte des paramètres calculés par le filtre de Kalman.

5. Système de mesure géodésique (1) selon l'une des revendications 1 à 4,
**caractérisé en ce que**
l'appareil volant (20) présente un capteur (26, 26a, 26b) destiné à mesurer la distance à un objet (81, 85).

6. Système de mesure géodésique (1) selon la revendication 5,
**caractérisé en ce que**
• la distance à l'objet peut être prise en compte dans le pilotage de l'appareil volant (20) et/ou
• l'appareil volant (20) peut être piloté de manière à pouvoir être tenu constamment à une certaine distance souhaitée de l'objet (81, 85) en fonction de la mesure de la distance à l'objet.

7. Système de mesure géodésique (1) selon l'une des revendications 1 à 6,
**caractérisé en ce que**
les données de pilotage et/ou une information d'état permettant d'obtenir les données de pilotage peuvent être transmises entre l'unité de mesure (30, 40, 50) et l'appareil volant (20).

8. Procédé de pilotage d'un appareil volant (20) automoteur et télépilotable, ledit appareil volant (20) étant piloté en déplacement et/ou en positionnement essentiellement stationnaire, au moyen d'une unité de mesure géodésique (30, 40, 50) sous la forme d'une station totale, d'un théodolite ou d'un laser de relevé, comportant
• une source de rayonnement destinée à émettre un faisceau optique essentiellement collimaté (32, 42, 52, 82),
• une base,
• une unité de visée basculable de manière motorisée autour de deux axes par rapport à la base, destinée à orienter la direction d'émission du faisceau optique (32, 42, 52, 82),
• des capteurs de mesure d'angle destinés à déterminer l'orientation de l'unité de visée, et
• une fonctionnalité de mesure de distance,
et dans lequel
• le faisceau optique essentiellement collimaté (32, 42, 52, 82) est émis dans une direction d'émission au moyen de l'unité de mesure (30, 40, 50),
• le faisceau optique (32, 42, 52, 82) interagit avec l'appareil volant (20) de manière à être réfléchi par un réflecteur (22) disposé sur l'appareil volant (20) et indiquant une position réelle de l'appareil volant (20), et
• à partir de ladite interaction, un état réel de l'appareil volant (20) est déterminé dans un système de coordonnées au moyen d'une position, d'une orientation et/ou d'une modification de position, ladite détermination tenant compte de la position réelle de l'appareil volant (20),
**caractérisé en ce que**
• des données de pilotage sont produites en fonction de l'état réel, notamment déterminé en continu, et d'un état souhaité défini, et l'appareil volant (20) est passé dans l'état souhaité, notamment dans un domaine de tolérance défini autour de l'état souhaité, par pilotage automatique au moyen des données de pilotage, et
• une distance entre l'unité de mesure (30, 40, 50) et l'appareil volant (20) est déterminée au moyen de la réflexion du faisceau (32, 42, 52, 82) sur l'appareil volant (20) et la position réelle de l'appareil volant (20) est déduite, notamment en continu, à partir de ladite distance et de la direction d'émission.

9. Procédé selon la revendication 8,
**caractérisé en ce que**
il est tenu compte d'une orientation réelle et/ou d'une vitesse réelle de l'appareil volant (20) lors de la détermination de l'état réel, et/ou d'une position souhaitée, d'une orientation souhaitée et/ou d'une vitesse souhaitée lors de la définition de l'état souhaité.

10. Procédé selon la revendication 9,
**caractérisé en ce que**
l'orientation réelle de l'appareil volant (20) est déterminée en tangage, en roulis et en lacet dans le système de coordonnées, notamment au moyen d'une unité de captage (21) interne affectée à l'appareil volant (20) et/ou
l'orientation réelle dans le système de coordonnées est déterminée par interaction
• d'un repère affecté à l'appareil volant (20) indiquant l'orientation réelle et
• d'un captage du repère afin de déterminer l'orientation réelle à partir de la position et de la disposition du repère.

11. Procédé selon l'une des revendications 8 à 10,
**caractérisé en ce que**
l'appareil volant (20) est déplacé en fonction de l'état réel et d'un certain itinéraire de vol (17), ledit itinéraire de vol (17) étant déterminé par un point de départ (14) et un point d'arrivée (15) et/ou par une pluralité de points intermédiaires (16a, 16b), et/ou par une orientation définie d'un axe de vol (18), notamment dans lequel
des informations relatives à l'état réel sont transmises à un filtre de Kalman et le déplacement de l'appareil volant (20) est commandé en tenant compte des paramètres calculés par le filtre de Kalman.

12. Procédé selon l'une des revendications 8 à 11,
**caractérisé en ce que**
• une distance entre l'appareil volant (20) et un objet (81, 85) est mesurée, notamment en continu,
• la distance à l'objet étant prise en compte dans le pilotage de l'appareil volant (20) et/ou
• l'appareil volant (20) étant piloté de manière à pouvoir être tenu constamment à une certaine distance souhaitée de l'objet (81, 85) en fonction de la mesure de la distance à l'objet.

13. Procédé selon l'une des revendications 8 à 12,
**caractérisé en ce que**
une position et une orientation de l'unité de mesure (30, 40, 50) sont prédéterminées dans un système de coordonnées global, la position étant prédéfinie par l'emplacement connu de l'unité de mesure (30, 40, 50) et/ou la position et l'orientation étant déterminées par un réglage à l'aide de points cibles connus, le système de coordonnées étant notamment référencé vis-à-vis du système de coordonnées global afin de pouvoir déterminer l'état réel de l'appareil volant (20) dans le système de coordonnées global.

14. Unité de mesure géodésique (30, 40, 50) sous la forme d'une station totale, d'un théodolite ou d'un laser de relevé, destinée à être utilisée dans un système selon l'une des revendications 1 à 7, comportant
• une source de rayonnement destinée à émettre un faisceau optique essentiellement collimaté (32, 42, 52, 82),
• une base,
• une unité de visée basculable de manière motorisée autour de deux axes par rapport à la base, destinée à orienter la direction d'émission du faisceau optique (32, 42, 52, 82),
• des capteurs de mesure d'angle destinés à déterminer l'orientation de l'unité de visée, et
• une fonctionnalité de mesure de distance,
**caractérisé en ce que**
l'unité de mesure (30, 40, 50) est conçue de manière à permettre la production des données de pilotage d'un appareil volant (20) automoteur et télépilotable, et leur transmission à l'appareil volant (20).

15. Produit programme d'ordinateur enregistré sur un support lisible par une machine, ou bien signal de données informatiques, matérialisé par une onde électromagnétique, comportant un code logiciel pour la réalisation de la production de données de pilotage en fonction
• d'un état réel, notamment déterminé en continu, d'un appareil volant (20) et
• d'un état souhaité défini
pour le pilotage automatique de l'appareil volant (20) dans l'état souhaité, par exécution d'un procédé selon l'une des revendications 8 à 13 lorsque le programme est exécuté sur une unité de traitement électronique des données.
